(19) **Europäisches Patentamt**
**European Patent Office**
**Office européen des brevets**

(11) **EP 4 764 667 A1**

(12) **EUROPEAN PATENT APPLICATION**

(43) Date of publication:
**24.06.2026 Bulletin 2026/26**

(21) Application number: **24221821.2**

(22) Date of filing: **19.12.2024**

(51) International Patent Classification (IPC):
**G02B 27/64** (2006.01)    **G06T 7/246** (2017.01)
**H04N 23/68** (2023.01)

(52) Cooperative Patent Classification (CPC):
**G02B 27/646; G06T 7/246; H04N 23/6811;**
**H04N 23/6812; H04N 23/682; H04N 23/683;**
**H04N 23/685; H04N 23/687**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Axis AB**
**223 69 Lund (SE)**

(72) Inventors:
• **Nilsson, Dennis**
  **223 69 LUND (SE)**
• **Jonsson, Peter**
  **223 69 LUND (SE)**

(74) Representative: **AWA Sweden AB**
  **Matrosgatan 1**
  **Box 5117**
  **200 71 Malmö (SE)**

Remarks:
  Amended claims in accordance with Rule 137(2)
  EPC.

(54)    **METHOD FOR PERFORMING DIGITAL IMAGE STABILIZATION**

(57)    In an aspect, there is provided a method for performing digital image stabilization (DIS) on a sequence of video frames captured by an image capturing device, comprising:

obtaining a sequence of motion values sampled from a motion signal while capturing the sequence of video frames such that each video frame is associated with a respective motion value;

obtaining a sequence of position values sampled from a position signal while capturing the sequence of video frames such that each video frame is associated with a respective position value;

determining, for each respective video frame, a residual motion value to obtain a sequence of residual motion values for the sequence of video frames; and

performing DIS on the sequence of video frames, comprising:

detecting an image feature in a reference video frame of the sequence of video frames;

tracking the image feature in each further video frame of the sequence of video frames;

determining frame motion data based on a displacement for the image feature in each further video frame in the sequence of video frames; and

generating a stabilized sequence of video frames based on the frame motion data;

wherein a size of a tracking window for tracking the image feature in each further video frame is set based on the sequence of residual motion values.

300

Obtain a sequence of motion values sampled from the motion signal while capturing the sequence of video frames such that each video frame is associated with a respective motion value — S301

Obtain a sequence of position values sampled from the position signal while capturing the sequence of video frames such that each video frame is associated with a respective position value — S302

Determine, for each respective video frame, a residual motion value to obtain a sequence of residual motion values for the sequence of video frames — S303

Perform DIS on the sequence of video frames — S304

*Fig. 4*

**Description**

TECHNICAL FIELD

The present invention generally relates to a method for performing digital image stabilization (DIS), an image processor, an image capturing device and a computer program product for implementing such a method.

BACKGROUND

Image stabilization (IS) is used in cameras to reduce the impact of camera movement, notably vibrations, on captured image frames. For example, camera movement may result in a blurred image frame and/or, when capturing video, result in an unstable video due to camera motion between video frames.

Where the camera is mounted to a supporting structure, such as a wall, a ceiling, a pole or other camera support (as often is the case in video surveillance applications) the camera vibrations may be caused by shaking of the camera and/or the supporting structure due to collision with another object, or exposure to other external forces such as wind. Where the camera is a hand-held, the camera vibrations may be due to an unsteady hand of the camera user.

Optical image stabilization (OIS) includes lens-based and sensor-based image stabilization. The basic principle in lens-based OIS is to actuate a movable lens element of the optical system of the camera to compensate for the camera vibrations. The OIS system may, based on sensed motion of the camera, move the movable lens element to compensate for the vibrational motion to keep the image steady on the image sensor of the camera. In sensor-based OIS, instead of moving a movable lens element, the OIS system may actuate the image sensor based on the sensed motion. This approach is sometimes referred to as "sensor-based image stabilization" (SIS) and is in the present disclosure considered as a type of OIS.

A common feature of the above-mentioned OIS approaches is that they involve actuating a physical element (e.g., lens or sensor) with a certain inertia. Hence, actuating the movable element will take some time and therefore the compensation will typically lag the movement to some degree. The amount of lag is dependent on the specific parameters of the OIS system, (e.g., responsiveness of the OIS system and actuators, the inertia of the movable element, a frequency of the vibration, etc.). As an illustrative non-limiting example, a typical lag for a state-of-the-art OIS system may lie in a range of about 5-10 ms. This may translate to some post-OIS residual movement of the image on the image sensor. Such post-OIS residual movement may among others result in movement of the image between the image frame(s), thus producing an unsteady video. The amount of residual movement tends to be more pronounced for higher frequency vibrations (e.g., above 5 Hz).

SUMMARY

In view of the above, it is an object of the present invention to provide improved approaches for performing image stabilization, in particular involving digital image stabilization (DIS) on a sequence of video frames, enabling effective compensation even in presence of post-OIS residual movement to reduce unsteadiness of a video. Further and alternative objects may be appreciated from the following.

According to a first aspect of the present invention, there is provided a method for performing digital image stabilization (DIS) on a sequence of video frames captured by an image capturing device, the image capturing device comprising: a motion sensor configured to output a motion signal indicating motion of the image capturing device, an optical image stabilization (OIS) system configured to compensate for motion of the image capturing device by controlling a position of a movable element of the OIS system based on the motion signal, and a position sensor configured to output a position signal indicating an instantaneous position of the movable element, the method comprising:

> obtaining a sequence of motion values sampled from the motion signal while capturing the sequence of video frames such that each video frame is associated with a respective motion value;
> obtaining a sequence of position values sampled from the position signal while capturing the sequence of video frames such that each video frame is associated with a respective position value;
> determining, for each respective video frame, a residual motion value to obtain a sequence of residual motion values for the sequence of video frames, wherein each residual motion value is determined based on the motion value and the position value associated with the respective video frame and indicates a residual motion of the image capturing device upon capturing the respective video frame not compensated for by the OIS system; and
> performing digital image stabilization (DIS) on the sequence of video frames, comprising:
>
>> detecting an image feature in a reference video frame of the sequence of video frames;
>> tracking the image feature in each further video frame of the sequence of video frames;

determining frame motion data based on a displacement for the image feature in each further video frame in the sequence of video frames; and

generating a stabilized sequence of video frames based on the frame motion data;

wherein a size of a tracking window for tracking the image feature in each further video frame is set based on the sequence of residual motion values.

The method according to the first aspect combines DIS with OIS to enable an effective, yet computationally efficient stabilization of a sequence of video frames.

A residual motion value, determined in accordance with the method, may be calculated in real-time and thus provide an instantaneous estimate of post-OIS residual movement (hereinafter termed "OIS error"). The residual motion value may in turn be used to adapt the tracking window, and thus the amount of pixel data being analyzed, for tracking the image feature. This enables use of precise and sophisticated computer vision-based approaches for determining frame motion data to be used by the DIS, such as inter-frame motion, i.e., approaches which would be computationally expensive to apply to the entire image area of the video frames. Indeed, such approaches may otherwise be too computationally expensive to perform on-the-fly using the processing resources available in an image capturing device with limited processing resources on-device, such as a typical surveillance camera. Thus, the method of the first aspect enables an efficient, yet more lightweight, approach for performing DIS.

Thereby, the method enables a more precise estimation of the compensation amount needed to stabilize the sequence of video frames than typically may be achieved in conventional gyro-based electronic image stabilization (EIS).

Further, by combining OIS and DIS in this manner, the image stabilization may use a larger crop size when generating the stabilized sequence of video frames, meaning that less pixel data needs to be discarded from each video frame.

Although the residual motion values are determined based on the respective signals output by the motion sensor and the position sensor, it is to be noted that the DIS which subsequently is applied to the sequence of video frames is not directly dependent on the measurement signals from these sensors, but rather is based on analysis of pixel data of the video frames of the sequence.

In some embodiments, determining each residual motion value comprises determining based on the motion value associated with the respective video frame a corresponding orientation value indicating an estimated instantaneous orientation of the image capturing device upon capturing the respective video frame, and determining the residual motion value based on the orientation value and the position value.

Vibrational motion of the image capturing device due to shaking tends to produce a greater variation in orientation/angle than in linear position of the image capturing device. Hence, determining the residual motion value based on an estimated instantaneous orientation may enable a more accurate and sensitive estimation of the OIS error at each instant.

In some embodiments, the residual motion value is determined based on a difference between the orientation value and the position value when mapped to a common coordinate system. One or the other, or both, of the orientation and position values may thus be converted to be expressed in a common unit, to facilitate determining a more relevant estimate of the OIS error at each instant. For instance, a transform may be applied to the orientation value to determine a corresponding position value. Alternatively, a transform may be applied to the position value to determine a corresponding orientation value. Alternatively, a respective transform may be applied to each of the orientation value and the position value to determine corresponding values in a common coordinate system.

In some embodiments, the motion signal indicates a rotational motion. The motion signal may thus be obtained from a sensor capable of detecting a rotational motion (e.g., as an angular rate) of the image capturing device/motion sensor, such as a gyro (i.e., gyroscope). As discussed above, sensing orientation/angle of the image capturing device may translate to a more sensitive measurement of vibrational motion, and hence enable a more accurate and sensitive estimation of the OIS error, in addition an effective OIS.

In some embodiments, the motion signal indicates an angular rate and the orientation values are derived by integrating the motion signal. Hence, the orientation values may be obtained by integrating the motion signal.

In some embodiments, the motion sensor comprises a gyro. A gyro may provide a motion signal indicating a rotational motion, in particular as an angular rate, with a relatively low noise.

In some embodiments, tracking the image feature comprises using optical flow analysis, wherein the optical flow analysis is applied selectively to pixels within the tracking window of each further video frame. Optical flow analysis enables the displacement of the image feature in each further video frame to be estimated in a precise manner. By applying the optical flow analysis selectively to the tracking window, i.e., confining the optical analysis to the tracking window, the amount of pixel data that needs to be processed during tracking may be reduced.

In some embodiments, the size of the tracking window in each further video frame is set based on the residual motion value associated with the further video frame. Hence, the size of the tracking window may be updated based on the instantaneous residual motion value associated with each respective video frame.

In some embodiments, the size of the tracking window is set to increase with increasing residual motion values. In case of a greater OIS error, it is expected that a greater displacement of the image feature may occur between video frames. Hence, the size of the tracking window may be increased to allow tracking a greater displacement of the image feature. Conversely, in case of a smaller OIS error, a smaller displacement of the image feature may be expected between video frames, allowing the tracking window, and thus the amount of pixel data that needs to be analyzed (e.g., using optical flow analysis) in the video frame, to be reduced.

In some embodiments, the tracking window is set to a first size responsive to the residual motion value being less than a threshold and to a second size greater than the first size responsive to the residual motion value exceeding the threshold. The size of the tracking window may hence be varied in a convenient manner between two sizes based on a computationally efficient threshold comparison.

In some embodiments, a location of the tracking window for tracking the image feature in each respective further video frame is determined based on the location of the tracking window in a preceding video frame of the video sequence (i.e., the respective video frame preceding the respective further video frame), and the residual motion value associated with the respective further video frame.

Hence, the residual motion value may further be used to update the location of the tracking window between successive video frames. This may increase the robustness of the feature tracking by enabling tracking of the image feature also for large displacements which otherwise would result in the image feature leaving the tracking window. This may be especially useful in case of a lower performance OIS system, and/or if the OIS system is not sufficiently well calibrated.

In some embodiments:

the sequence of motion values is a sequence of first motion values sampled from a first motion signal of a first sensing axis of the motion sensor and the method further comprises obtaining a sequence of second motion values sampled from a second motion signal of a second sensing axis of the motion sensor while capturing the sequence of video frames such that each video frame is further associated with a respective second motion value,

the sequence of position values is a sequence of first position values sampled from a first position signal of a first sensing axis of the position sensor and the method further comprises obtaining a sequence of second position values sampled from a second position signal of a second sensing axis of the position sensor while capturing the sequence of video frames such that each video frame is further associated with a respective second position value, and the method comprises:

determining, for each respective video frame, a residual motion vector to obtain a sequence of residual motion vectors for the sequence of video frames, wherein each residual motion vector is determined based on the first and second motion values and the first and second position values associated with the respective video frame, wherein each residual motion vector comprises a first component with a first residual motion value and a second component with a second residual motion value, and wherein the first and second residual motion values indicate a residual motion of the image capturing device along a first and second compensation axis, respectively, of the OIS system not compensated for by the OIS system upon capturing the respective video frame.

Thus, the motion of the image capturing device and the position of the movable element of the OIS system may be sensed along two respective sets of sensing axes, in turn enabling the residual motion, i.e., the OIS error, to be estimated in two dimensions.

The first residual motion values of the first components of the sequence of residual motion vectors may correspond to or define the above-mentioned sequence of residual motion values (which may be termed "sequence of first residual motion values") and the second residual motion values of the second components of the sequence of residual motion vectors may correspond to or define a sequence of second residual motion values.

Where a residual motion vector is determined, the size of the tracking window in each further video frame may be set based on the first and second residual motion values of the first and second components of the sequence of residual motion vectors. For example, the size of the tracking window in any given further video frame may be set based on a magnitude of the residual motion vector associated with the given further video frame, or a maximum of the magnitude of the first component and the magnitude of the second component.

In embodiments where the location of the tracking window is updated, the location of the tracking window for tracking the image feature in each respective further video frame may be determined based on the location of the tracking window in the preceding video frame of the video sequence, and the residual motion vector associated with the respective further video frame. Thus, the location of the tracking window in a given video frame may be updated relative its preceding video frame in accordance with the first and second components of its associated residual motion vector.

The first component and the second component of the residual vectors may here be mapped along a horizontal axis and a vertical axis, respectively, of the image sensor. Thus, the first component of the residual vector associated with a given video frame may be used to shift the location of the tracking window relative the location of the tracking window in the preceding video frame along the horizontal axis of the image sensor. Correspondingly, the second component of the residual vector associated with the given video frame may be used to shift the location of the tracking window relative the location of the tracking window in the preceding video frame along the vertical axis of the image sensor. The horizontal and vertical axes of the image sensor may correspond to (i.e., align with) the X- and Y-axis respectively of the video frame.

In some embodiments, the image feature is a first image feature detected in the reference video frame, wherein performing the DIS on the sequence of video frames comprises:

further detecting at least a second image feature in the reference video frame of the sequence of video frames;
tracking the first and second image features in each further video frame of the sequence of video frames; and
determining the frame motion data based on a respective displacement of the first and second image features in each further video frame in the sequence of video frames;
wherein a size of a respective tracking window for tracking the first and second image features in each further video frame is set based on the sequence of residual motion values.

Hence, the DIS may be based on tracking (at least) a first and second image feature detected in the reference image frame, wherein the first and second image features are individually tracked in each further video frame using a respective tracking window. The frame motion data may for example be based on an average of the respective displacements of the first and second image features in each further video frame.

In some embodiments, generating the stabilized sequence of video frames based on the motion data comprises applying an image transform to each video frame of the sequence, wherein the image transform is based on the motion data. For instance, the image transform may comprise cropping the video frame.

In some embodiments, the movable element is a movable optical element of the OIS system. The OIS system may thus be configured for lens-based OIS.

In some embodiments, the movable element is the image sensor. The OIS system may thus be configured for sensor-based OIS.

In some embodiments, the OIS system comprises a closed-loop controller configured to generate an OIS control signal for controlling the position of the movable element, and to use the position signal as a feedback signal. Thus, the position sensor may be arranged in a feedback path of the closed-loop controller and configured to output a feedback signal indicating a position of the movable element.

In some embodiments, the position sensor comprises a Hall effect sensor.

According to a second aspect, there is provided an image capturing device comprising:

a motion sensor configured to output a motion signal indicating motion of the image capturing device;
an OIS system configured to compensate for motion of the image capturing device by controlling a position of a movable element of the OIS system based on the motion signal;
a position sensor configured to output a position signal indicating a position of the movable element; and
a processing device configured to perform the method of the first aspect or any embodiments thereof.

According to a third aspect, there is provided a computer program product comprising computer program code portions configured to perform the method of the first aspect or any embodiments thereof, when executed by a processing device.

In general, any embodiment, feature, effect or advantage discussed in connection with the first aspect applies correspondingly to the second and third aspects.

BRIEF DESCRIPTION OF THE DRAWINGS

The above, as well as additional objects, aspects, embodiments, features and effects of the present disclosure, may be better understood through the following illustrative and non-limiting detailed description, with reference to the appended drawings. In the drawings like reference numerals will be used for like elements unless stated otherwise.

Fig. 1 is a block diagram of an image capturing device according to an implementation.
Fig. 2 is a block diagram of an image capturing device according to a further implementation.
Fig. 3 shows in further detail a block diagram of an IS system combining OIS and DIS in accordance with an implementation.
Fig. 4 is a flow chart of a method for performing DIS.
Fig. 5 is a flow chart showing sub-steps of the method of Fig. 4.
Fig. 6a-c schematically illustrate image feature detection and tracking with reference to a sequence of video frames.
Fig. 7a-b schematically illustrate a further example of image feature tracking wherein in addition to the size of the tracking window, the location of the tracking window is updated between video frames.

DETAILED DESCRIPTION

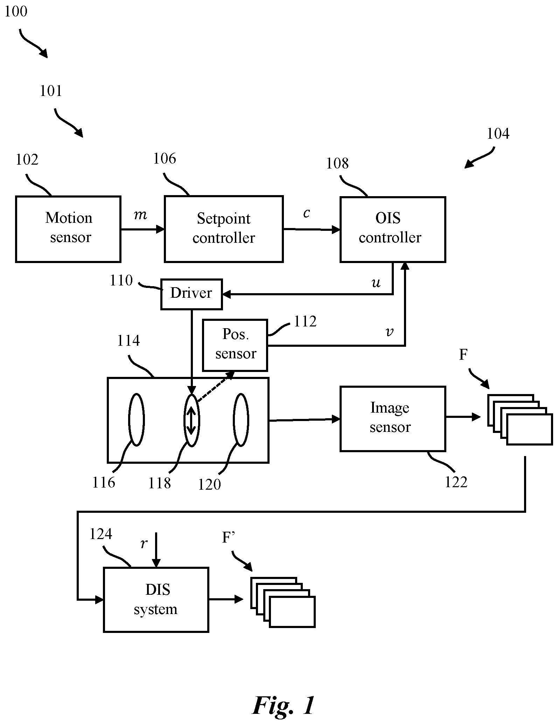

Fig. 1 is a schematic block diagram of an image capturing device 100. The image capturing device 100 may be a video camera. For instance, a useful application for the image stabilization approaches of the present disclosure is an image capturing device 100 in the form of a monitoring or surveillance camera with video-capturing capability, for instance a networked surveillance camera (e.g., an Internet Protocol (IP) camera). As such, the image capturing device 100 may be adapted for a fixed installation, e.g., by being mounted to a supporting structure such as a building structure (e.g., a wall, a ceiling, a roof, a lighting pole, a mast, etc.), or other suitable structure, to monitor a scene. However, the image stabilization approaches of the present disclosure are applicable also to image capturing devices suitable for hand-held or body-worn image capture and/or for mounting on a camera tripod. For conciseness, the image capturing device 100 may in the following be referred to as camera 100, without loss of generality.

The camera 100 comprises an optical system 114 and an image sensor 122. The optical system 114 comprises a system of optical elements, such as one or more lenses 116, 118, 120. The number of optical elements shown in Fig. 1 is merely a non-limiting example and both fewer and greater number of lenses and/or other optical elements are also possible. During an image capturing operation, the camera 100 may monitor a scene by capturing, using the image sensor 122, video frames F imaged onto the image sensor 122 by the optical system 114, thereby providing a sequence of video frames F of a video of the scene. The video frames F may be captured at a predetermined or variable frame rate suitable for the given monitoring application. The video frames F may be provided to a downstream video processing pipeline to be subjected to typical video processing operations prior to transmission and/or storage, such as demosaicing, encoding, etc. These examples of post-processing operations may each be of a type which per se are known in the art and will therefore not be further discussed herein.

As discussed above, motion of the camera 100, such as vibrational motion due to shaking of the camera 100 during an image capturing operation, may impair the quality of individual frames, as well as of the sequence of video image frames. To compensate for such camera motion, the camera 100 comprises an image stabilization (IS) system 101 implementing optical image stabilization (OIS), as set out in the following.

The camera 100 comprises a motion sensor 102 configured to output a motion signal m. The motion signal m indicates an instantaneous motion of the motion sensor 102 and thus of the camera 100. The IS system 101 comprises an OIS system 104 configured to compensate for motion of the camera 100 based on the motion signal m. The OIS system 104 comprises a setpoint controller 106, an OIS controller 108, a driver 110 and a movable element. In the illustrated example, the OIS system 104 is configured for lens-based OIS wherein the movable element is a movable optical element of the optical system 114, here exemplified by the lens 118 being a movable lens. As may be appreciated, the movable element may however also be formed by a group of movable lenses of the optical system 114, or some other optical element. The setpoint controller 106 is configured to determine a control signal c in the form of a setpoint for the OIS controller 108. The setpoint controller 106 may also be referred to as a setpoint generator or block. The setpoint controller 106 is described in further detail below. The OIS controller 108 is configured to, responsive to the control signal / setpoint c, control a position of the movable lens 118. The OIS controller 108 is configured to generate, based on the setpoint c, an actuation signal u for causing the driver 110 to actuate the movable lens 118. The driver 110 is accordingly configured to actuate the movable lens 118 in accordance with the actuation signal $u$, thereby compensating for vibrational motion of the camera 100.

The driver 110 may for instance comprise one or more voice coil motor (VCM) actuators, or other suitable conventional high-speed actuators, such as comb drives or piezo actuators. The OIS system 104 may typically be capable of compensating for motion along a set of compensation axes, such as two or more. The driver 110 may accordingly comprise, for each compensation axis of the OIS system 104, a respective actuator (e.g., VCM) for actuating the movable lens 118 to provide compensation along the compensation axis. Thus, each compensation axis of the OIS system 104 may be associated with a respective axis of motion of the movable lens 118. The driver 110 may for example comprise actuators (e.g., VCMs) for shifting a position of the movable lens 118. The position may here refer to a location (i.e., linear position) and/or a rotation (i.e., angle/tilt of the lens/lenses). For instance, the driver 110 may comprise actuators for translating the movable lens 118 in a plane transverse to an optical axis of the optical system 114. The driver 110 may additionally or alternatively comprise actuators for rotating the movable lens 118 relative the optical axis. For instance, the OIS system 104 may be configured to move the movable lens 118 along two transverse directions in the plane. The OIS system 104 may thereby compensate for changes in pitch and yaw (defined below) of the camera 100. Also other approaches for controlling the position of the movable lens 118 are possible, such as by moving the movable lens 118 along a curved path (e.g., parabolic) to simultaneously achieve a varying location and angle of the movable lens 118. These are however merely a few examples and other approaches for actuating a movable lens or other movable optical element are also possible.

The motion sensor 102 may be any type of sensor capable of sensing motion with respect to (e.g., about or along) at least one sensing axis and output a motion signal m indicating the sensed motion for each sensing axis. The motion sensor 102 may be configured to sense motion along each of the set of compensation axes of the OIS system 104. Conveniently, the motion sensor 102 may comprise a corresponding set of sensing axes and be arranged such that the set of sensing axes align with the set of compensation axes. Thus, the motion sensor 102 may output a motion signal m indicating an instantaneous value of a respective motion component corresponding to each compensation axis.

The motion sensor 102 may be configured to sense rotational motion and/or linear motion and output a motion signal m indicating the sensed rotational and/or linear motion. The motion sensor 102 may comprise one or more gyros, one or more accelerometers, or other suitable types of inertial measurement units (IMU). The term "gyro" and "accelerometer" as used herein may refer to gyros and accelerometers having one or more sensing axes. For instance, a "single" gyro or accelerometer may on a physical / hardware level comprise a number of individual gyro or accelerometer sensors, respectively, each configured to sense motion with respect to a respective sensing axis. Thus, a "2-axis gyro" may in practice comprise two individual gyro sensors, each configured to sense an angular rate about a respective axis (e.g., pitch and yaw). A "3-axis gyro" may comprise three individual sensors, each configured to sense an angular rate about a respective axis (e.g., pitch, yaw and roll). Similarly, a "3-axis accelerometer" may comprise three individual acceleration sensors, each configured to sense acceleration along a respective axis (e.g., three orthogonal axes with a fixed orientation with respect to the camera 100). Where more than one sensor and/or type of sensing technologies are used, data fusion may be used to combine the individual motion signals from each sensor into a motion signal m indicating motion for one or more sensing axes of the motion sensor 102.

For example, the motion sensor 102 may be configured to sense rotational motion as an angular rate (i.e., a rate of change of orientation / rotation) of the camera 100 / motion sensor 102 and output a corresponding motion signal m indicating the sensed angular rate. The motion sensor 102 may be configured to sense an angular rate with respect to one or more axes, such as pitch, yaw and/or roll. Pitch may here be used to refer to a pitch angle of the optical axis (i.e., viewing direction) of the camera 100 in a vertical plane. Yaw may refer to a yaw angle of the optical axis of the camera 100 in a horizontal plane. Roll may here refer to a roll angle of the camera 100 about its optical axis. An angular rate may conveniently be sensed using a gyro. For example, a 2-axis gyro may be configured to sense angular rates of pitch and yaw angles of the camera 100. A 3-axis gyro may be configured to sense angular rates of pitch, yaw and roll angles of the camera 100. Rotational motion may also be sensed using a pair of sensing axes of a 2-axis (or greater) accelerometer. The accelerations sensed along the pair of sensing axis may be fused (e.g., integrated and converted by a trigonometric transform) into a scalar value representing an angular rate about an axis orthogonal to the pair of sensing axes. The conversion may be performed by an on-sensor computational block of the motion sensor 102, or by an off-sensor computational block of the camera 100. More generally, any sensor configuration (e.g., a gyro and/or accelerometer) allowing sensing of a rotational motion may be used. For instance, a motion sensor 102 combining a gyro and an accelerometer may use the gyro for sensing rotational motion about a first sensing axis and the accelerometer for sensing rotational motion about a second sensing axis.

As discussed above, vibrational motion tends to produce a greater variation in rotation than in linear translation of the camera 100. Thus, having the motion sensor 102 configured to sense at least rotational motion may allow a more sensitive sensing of vibrational movement, and thus a more effective image stabilization. The description will hence in the following mainly refer to implementations of an OIS system compensating for motion based on a motion signal indicating rotational motion (e.g., angular rate). However, the following discussion may also be applied in a corresponding manner to implementations of an OIS system compensating for motion based on a motion signal indicating linear motion (e.g., linear motion rate or linear acceleration).

Regardless of the specific implementation of the motion sensor 102, the motion sensor 102 may be configured to output the motion signal m as a digital motion signal or an analog motion signal. Where the motion sensor 102 outputs an analog motion signal m it may be sampled by an analog-to-digital converter (ADC) of the camera 100 arranged upstream the OIS system 104 and connected to an analog output of the motion sensor 102. Thus, the analog motion signal may be AD converted into a digital signal comprising (e.g., for each component) a time-series of motion values (i.e., "motion samples") to be provided as input to the OIS system 104. Where the motion sensor 102 outputs a digital motion signal m the motion sensor 102 may comprise an internal ADC and thus perform AD conversion of an internal analog motion signal prior to being output via a digital output of the motion sensor 102. Thus, the motion signal $m$ may be output as a digital signal, comprising (e.g., for each component) a time-series of motion values (i.e., "motion samples") to be provided as input to the OIS system 104.

In the illustrated example, the setpoint controller 106 is shown to directly receive the motion signal m from the motion sensor 102. However, the motion signal m may typically be subjected to AD conversion (where the motion sensor 102 comprises an analog output) and/or filtering (e.g., by a filtering stage comprising integration and/or low-pass filtering of the motion signal $m$) prior to being received by the setpoint controller 106.

In the illustrated example, the OIS controller 108 of the OIS system 104 is implemented as a closed-loop controller. Thus, the OIS system 104 further comprises a position sensor 112 configured to sense an instantaneous position of the movable lens 118 (e.g., a linear position and/or an angle/tilt of the lens/lenses) and provide a corresponding position signal *v* as feedback signal to the OIS controller 108. Thus, the position sensor 112 may be arranged in a feedback path of the OIS controller 108 and configured to output a feedback signal indicating a position of the movable lens 118. The position sensor 112 may, similar to the motion sensor 102, comprise one or more sensing axis and thus be configured to sense / measure the position of the movable lens 118 (or more generally the movable element) with respect to each of its sensing axes. Thus, the position sensor 112 may provide, for each sensing axis of the position sensor 112, a respective position signal indicating an instantaneous position of the movable element / movable lens 118 with respect to the sensing axis. The position sensor 112 may for instance comprise a Hall effect sensor, e.g., comprising one Hall sensor element for measuring the position of the movable lens 118 along each respective sensing axis.

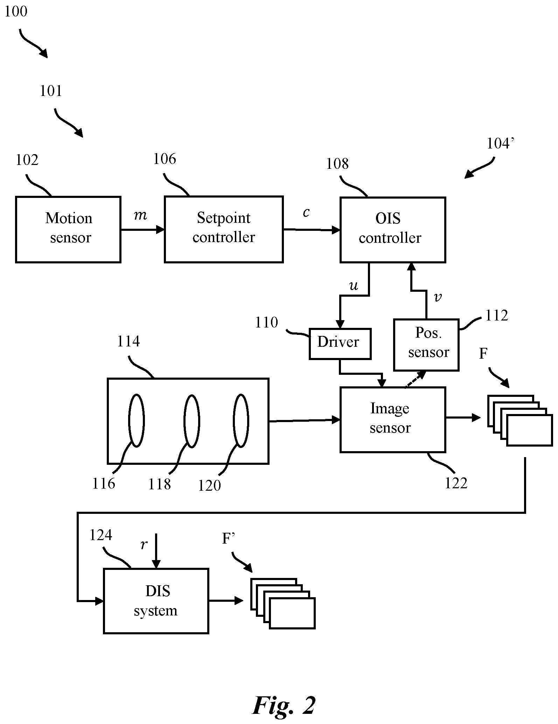

Fig. 2 is a block diagram of an alternative implementation of the image capturing device 100 comprising, instead of a lens-based OIS system 104 as in Fig. 1, a sensor-based OIS system 104'. Thus, the OIS system 104' of Fig. 2 is configured to provide OIS by controlling a position of the image sensor 122. The driver 110 of the OIS system 104' may in analogy with the driver 110 of the OIS system 104 of Fig. 1 be implemented using a set of actuators such as VCM actuators, for controlling a position of the image sensor 122 in an imaging plane and/or a tilting angle of the image senor 122. The OIS system 104' may further implement a closed-loop control and comprise a position sensor 112 (e.g., realized by Hall sensors and/or optical sensors) to provide a position signal *v* indicating an instantaneous position of the image sensor 122 as feedback signal to the OIS controller 108. The discussion of Fig. 1 otherwise applies correspondingly to Fig. 2 and reference is thus made to the above for a discussion of correspondingly numbered elements, to avoid undue repetition.

While here for simplicity shown as alternative implementations, it is also possible to implement OIS using a combination of lens-based and sensor-based OIS. For example, a movable optical element (e.g., corresponding to the lens 118 of Fig. 1) and the image sensor 122 may be arranged in a common camera module, wherein OIS may be realized by controlling a position and/or angle of the camera module, i.e., as a single unit.

The IS system 101 as shown in each of Fig. 1 and 2 further comprises (in addition to the OIS system 104 and 104', respectively) a digital image stabilization (DIS) system or module 124. The DIS system 124 may apply post-processing to the captured video frames F in order to compensate for residual motion remaining after compensation by the OIS system 104 and output a stabilized sequence of video frames F'. The DIS system 124 may be comprised in the above-mentioned video processing pipeline. The DIS system 124 may typically be implemented at an initial or at least early stage of the pipeline, such that subsequent post-processing may benefit from stabilization achieved by the DIS. The DIS implemented by the DIS system 124 is based on tracking one or more image features across a sequence of video frames F and apply image transforms to the video frames F so as to keep the tracked image feature(s) steady within the image area of successive video frames. In accordance with the present disclosure, to facilitate a computationally efficient DIS, and to reduce the amount of pixel data to process, the DIS system 124 takes into account a residual motion value *r*, providing an estimate of the instantaneous OIS error, by adapting the size of the tracking window used for tracking each image feature based on the residual motion value *r*. Implementations of the DIS and DIS system 124 are further discussed below.

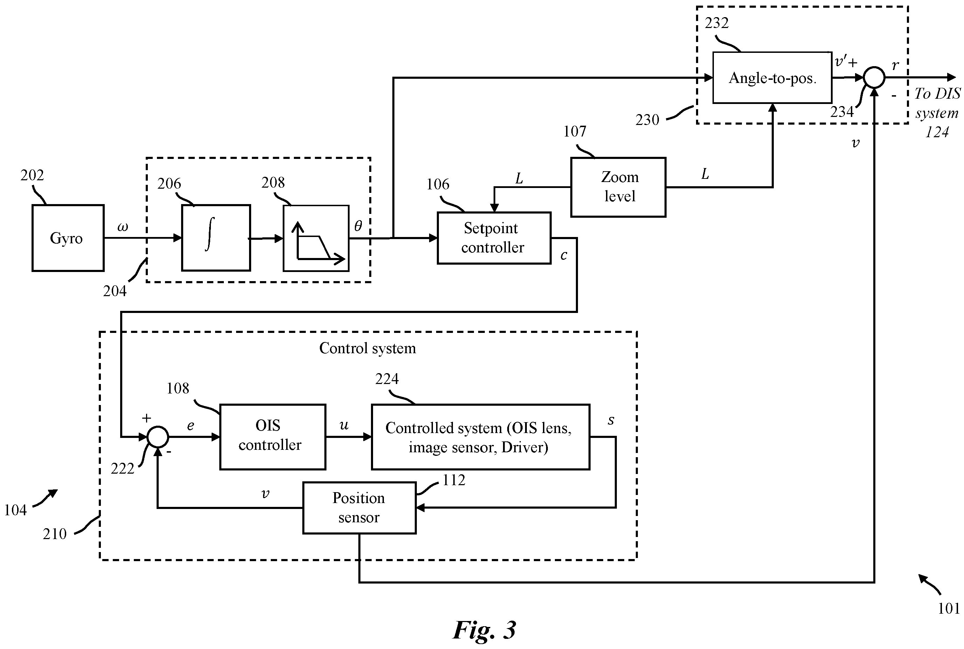

Fig. 3 shows in further detail a block diagram of the IS system 101, with particular focus on the OIS system 104. While Fig. 3 shows a lens-based OIS system 104 corresponding to Fig. 1, the discussion applies correspondingly to image sensor-based OIS as shown in Fig. 2, as well as a combined lens- and sensor-based OIS.

Without loss of generality, the OIS system 104 of Fig. 3 will be described with reference to a motion sensor 202 implemented by a gyro. Reference will further be made to a single sensing and compensation axis, e.g. pitch or yaw. Thus, for the purpose of the following discussion, the motion sensor 202 is assumed to output a motion signal $\omega$ indicating an angular rate of change of an orientation of the motion sensor 202 about its sensing axis (e.g., the rate of change of the pitch or yaw). It is further assumed that the sensing axis of the motion sensor 202 is aligned with the compensation axis of the OIS system 104 such that a motion with respect to the sensing axis of the motion sensor 202 may be compensated for by a corresponding motion / actuation of the movable element (e.g., lens 118 or image sensor 122) with respect to its axis of motion.

The OIS system 104 comprises a closed-loop control system 210 comprising the OIS controller 108. The OIS controller 108 may be implemented by a PID controller. In principle, a simpler implementation of the OIS controller 108 is also possible, such as a PI controller. However, given the fast response typically required for effective OIS, it is typically beneficial to use each of the P-, I- and D-components.

Block 224 represents the controlled system of the control system 210 and may with reference to Fig. 1 represent the movable lens 118 (e.g., movable lens) and the driver 110 actuating the movable lens 118. In case of an image sensor-based OIS like OIS system 104' of Fig. 2, the block 224 may instead represent the image sensor 122 and the driver 110 actuating the image sensor 122. The controlled parameter (i.e., the process variable) of the control system 210 is the position of the movable lens 118 and is denoted *s*. The position is as discussed above measured by the position sensor 112 (e.g., a Hall sensor) and provided as feedback signal *v*. The feedback signal *v* is subtracted from the setpoint *c* received from the setpoint controller 106, to generate an error signal *e* for the OIS controller 108.

A general description of operations performed by the OIS system 104 to perform OIS during an active state is provided in the below, with reference to Fig. 3. These operations may in particular be performed during capturing of a video sequence of video frames F.

The OIS system 104 sequentially obtains a time-series (i.e., sequence) of motion values of the motion signal $\omega$ (i.e., "angular rate samples" or "motion samples") from the motion sensor 202. For convenience, it will in the following be assumed that the motion signal $\omega$ is a digital motion signal, and accordingly, the motion samples and the motion signal may be referred to using the same label $\omega$. If needed for ease of explanation, a motion sample $\omega$ obtained at a given time instant $t = t_i$ (i.e., sampled from the motion signal $\omega$ at sampling instant $t_i$) may in the following be denoted $\omega(t_i)$. The parameter $i$ is here an integer index for the given time / sampling instant such that $t_i = i * \Delta_t$ where $\Delta_t$ is the sampling interval of the motion signal / motion samples $\omega$ and $t_0$ is an arbitrary reference point in time. Correspondingly, a time-series of motion samples $\omega$ obtained by the OIS system 104 at a given time instant $t = t_i$ may be denoted $\omega(t_i)$. The term "sampling interval" (interchangeably "sampling period") is in the present disclosure used in the normal sense of the word to refer to the time interval or time period between sampling instants, i.e., the inverse of the sampling rate. The sampling rate of the samples $\omega$ (e.g., the sampling rate of the gyro) may for example lie in a range from a few kHz up to 10 kHz, or higher.

The time-series of samples $\omega$ may optionally be stored in a buffer (not individually shown) of the OIS system 104. The buffer may for example be implemented as a first-in-first-out (FIFO) buffer. Thus, assuming the buffer has been filled with a time-series of samples $\omega(t_{i-1})$ at time instant $t_{i-1}$, upon obtaining a new sample $\omega(t_i)$ at time instant $t_i$, the time-series $\omega(t_{i-1})$ may be updated with the new sample $\omega(t_i)$ by discarding an oldest (first) sample $\omega$ of the time-series $\omega(t_{i-1})$ and the new sample $\omega(t_i)$ may be appended as a newest (last) sample $\omega(t_i)$ to the remaining samples of the time-series $\omega(t_{i-1})$ to form an updated/current time series of motion samples $\omega(t_i)$.

The motion samples $\omega$ obtained by the OIS system 104 are in turn passed through a filtering stage 204 arranged upstream the setpoint controller 106. The filtering stage 204 comprises an integrator 206 and a low-pass filter 208 integrating and filtering, respectively, the motion / angular rate samples $\omega$ over time to produce a time-series of orientation values (i.e., "orientation samples" or "angular samples"). The time-series of orientation samples output by the filtering stage 204 may in the following be denoted $\theta$ while individual orientation samples ("angular samples") may be denoted $\theta$. Analogous to the discussion of the motion samples $\omega$, an orientation sample derived from a motion sample $\omega(t_i)$ may be denoted $\theta(t_i)$. In other words, $\theta(t_i)$ denotes an orientation sample obtained for time / sampling instant $t_i$ of the motion signal $\omega$. Correspondingly, a time-series of orientation samples $\theta$ obtained by the OIS system 104 for a given time / sampling instant $t = t_i$ may be denoted $\theta(t_i)$. The orientation values / samples may be produced at a same rate as the sampling rate of the motion signal $\omega$ such that the time series of motion samples $\omega$ and the time-series of orientation samples $\theta$ have equal sampling rates (i.e., the sampling interval between their respective samples are the same for both time-series).

To reduce sensitivity to noise in the motion signal $\omega$ the integrator 206 is implemented as a leaky integrator. Thus, the integrator 206 may compute an updated orientation/angular sample $\theta(t)$ for time instant $t = t_{i+1} = t_i + \Delta_t$ according to:

$$\theta(t_i + \Delta_t) = C * (\theta(t_i) + \omega(t_i + \Delta_t) * \Delta_t)$$

$$(\text{Eq. 1})$$

where $\Delta_t$ is the sampling interval of the motion signal $\omega$, and $C$ is a "leaky" integration amount. The integration amount $C$ may for instance be set to a value in a range of 0.99 to 0.9999, as a non-limiting example. The specific value may be a design choice made in view of factors such as the amount of noise in the motion signal $\omega$, the desired responsiveness of the OIS system 104, etc. The filtering stage 204 may as shown further comprise a low-pass filter 208. The low-pass filter 208 is here shown as a post-processing step to the integration 206, however, low-pass filtering may alternatively, or additionally, be performed prior to the integration 206. In either case, a low-pass filter 208 may further suppress noise and thus reduce the noise sensitivity.

The setpoint controller 106 is arranged downstream the filtering stage 204 to sequentially obtain orientation samples $\theta$ (e.g., integrated and typically low-pass filtered) of the time-series of orientation samples $\theta$ output by the filtering stage 204. The setpoint controller 106 may optionally include an internal buffer (not individual shown), for instance implemented by a FIFO buffer. For the purpose of present discussion, it may be assumed that the setpoint controller 106 obtains orientation samples $\theta$ at the same sampling rate as the motion samples $\omega$ are obtained from the motion sensor 202. However, it is also possible to configure the setpoint controller 106 to obtain orientation samples $\theta$ from the filtering stage 204 at a lower rate. That is, the setpoint controller 106 may perform down-sampling of the time-series of orientation samples $\theta$, such as at a fraction (e.g.., ½ or ¼) of its sampling rate. In general, the sampling rate of the setpoint controller 106 may depend on factors such as the amount of memory available for buffering orientation samples $\theta$, the rate at which the setpoint $c$ is to be updated for the control loop of the OIS system 104 to provide a desired response, the processing speed of processor circuitry implementing the setpoint controller 106, etc.

A change between a pair of successive samples $\theta$ of the time-series $\theta$ (e.g., $\theta(t_{i-1})$ and $\theta(t_i)$) indicates the angular displacement of the camera 100 (i.e., about the sensing axis of the motion sensor 202) between $t_{i-1}$ and $t_i$. Thus, responsive to obtaining a sample $\theta$ (e.g., a new/updated/next sample $\theta$), the setpoint controller 106 determines, based on the obtained sample $\theta$, an updated setpoint (e.g., a new/updated/next setpoint) forming the control signal c for the OIS system 104. Various implementations of the setpoint controller 106 are possible.

For example, the setpoint controller 106 may implement an angle-to-position function, to transform the obtained sample $\theta$, which in the present example is an angle, into a corresponding position value for the movable element, e.g., the movable lens 118 or the image sensor 122. More specifically, the angle-to-position function may map the sample $\theta$ (which represents the instantaneous orientation of the camera 100) to a setpoint c representing a position of the movable element (e.g., lens 118 or sensor 122). The orientation samples $\theta$ may thus be mapped to the coordinate system of the position values $v$ output by the position sensor 112. The specific form of the angle-to-position function will depend on the design of the OIS system 104, the location of the movable element relative the pivot point of the angular displacement indicated by the sample $\theta$, the geometric relationship between the sensing axis and the compensation axis, etc. The transform may typically be realized by multiplying the orientation sample $\theta$ with a predetermined conversion factor (a constant). Suitable approaches for converting an angular displacement measured by a motion sensor (e.g., a gyro), to a linear position of a movable compensation element as measured by a position sensor (e.g., a Hall sensor), as part of an OIS system, are per se known in the art and may accordingly be implemented by the setpoint controller 106.

The amount of compensation (i.e., the required translation of the movable element of the OIS system 104) that needs to be applied responsive to a given change in orientation of the camera 100 is further dependent on the focal length of the optical system (e.g., optical system 114) of the camera. Therefore, in case the optical system has a zoom lens, the angle-to-position function may further take into account a current zoom level $L$ of optical system. The current zoom level $L$ may as shown in Fig. 3 be provided by a zoom level block 107. For a computationally efficient implementation, the setpoint controller 106 may retrieve a gain value from a predetermined look-up-table (e.g., stored in a memory of the OIS system 104) associating each of a number of zoom level entries with a predetermined gain value. The retrieved gain value may be the predetermined gain value associated with the zoom level entry corresponding to (e.g., closest to) the current zoom level $L$. The setpoint controller 106 may accordingly multiply the position value given by the angle-to-position function with the retrieved gain value. The result may be output as the next setpoint c to the control system 210 comprising the OIS controller 108.

While in the above example, the setpoint c is determined by applying an angle-to-position function to an orientation sample $\theta$ obtained from the filtering stage 204, more elaborate implementations of the setpoint controller 106 are also possible. For instance, the setpoint controller 106 may implement a Kalman filter or other predictive filter in order to estimate a next orientation sample $\theta(t_{i+1})$. The estimated orientation sample $\theta(t_{i+1})$ may subsequently be transformed using an angle-to-position function as discussed above, wherein the transformed value may be output as the setpoint c. It is also possible to first apply an angle-to-position function to an obtained sample $\theta$ and then apply the predictive filter to the transformed sample to determine the setpoint c.

The setpoint c input to the control system 210 is as shown at block 222 in Fig. 3 summed with the inverted position signal $v$ (the negative of the position signal $v$, i.e., -$v$) output by the position sensor 112 to generate an error $e$ representing the tracking error of the control system 210. The error $e$ represents the tracking error (i.e., instantaneous tracking error) in terms of position of the movable element. The error $e$ forms the input to the OIS controller 108, which in response generates the actuation signal $u$ for causing the driver (e.g., the driver 110) to actuate the movable element of the controlled system 224 (e.g., lens 118 or sensor 122). For example, where the OIS controller 108 is a PID controller the actuation signal $u$ may be determined as the sum of the P-, I- and D-components based on the error $e$. Any other suitable conventional approach for generating an actuation signal $u$ based on an error e in a closed-loop controller may be used.

Analogous to the notation introduced above with respect to the motion signal and motion samples $\omega$, the position signal and a sample of the position signal may be referred to using a same label $v$. Further, if needed for ease of explanation, a position sample $v$ obtained at a given time instant $t = t_i$ (i.e., sampled from the position signal $v$ at sampling instant $t_i$) may in the following be denoted $v(t_i)$. Correspondingly, a time-series of position samples $\mathbf{v}$ that has been obtained / sampled from the position signal at a given time instant $t = t_i$ may be denoted $\mathbf{v}(t_i)$.

In the above example, the setpoint controller 106 performs an angle-to-position transform to determine the setpoint c in terms of a setpoint of a position of the movable element. However, other implementations are also possible. For instance, the setpoint controller 106 may alternatively be configured to output the setpoint c in the angular domain of the orientation samples $\theta$. Further, an angle-to-position block may alternatively be provided in the feedback path of the closed-loop control system 210, transforming the position sample / position value $v$ output by the position sensor 112 into a corresponding angle. The error signal $e$ input to the OIS controller 108 will in this case represent the tracking error of the control system 210 in an angular domain. The OIS controller 108 may accordingly implement an angle-to-position transform to generate the actuation signal $u$.

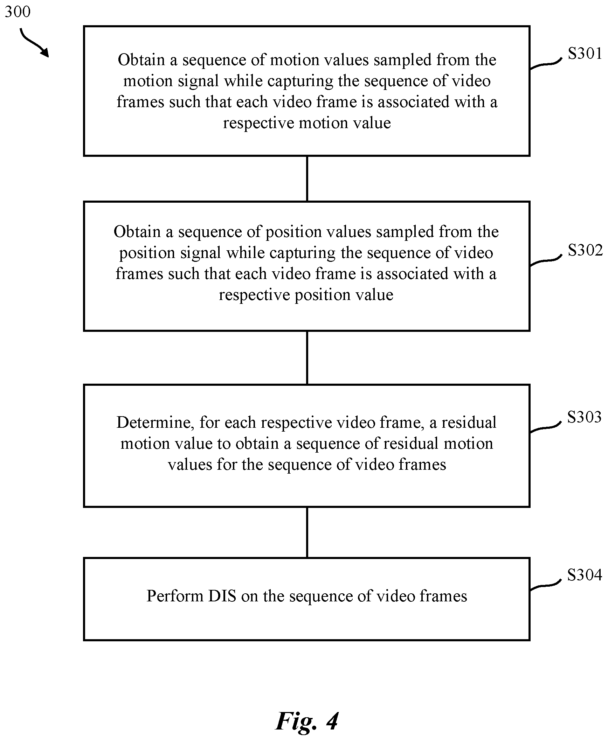

As mentioned above, the IS system 101 in addition to OIS system 104 or 104' comprises a DIS system 124 supplementing the OIS with DIS. The DIS is based on a residual motion value r (hereinafter interchangeably "residual value r", "residual sample r", or simply "residual r"), providing an estimate of the instantaneous OIS error. To determine the residual r, the IS system 101 comprises as shown in Fig. 3 a residual computation block 230 (hereinafter interchangeably "residual block 230"). In the following, implementations of a method 300 for controlling the DIS system 124, based on the residual r determined by the residual block 230, will be disclosed with further reference to the flow charts of Fig. 4-5. It is to be noted that the steps of the method 300 described in the following are performed while the camera 100 captures a sequence of video frames F and the OIS system 104 is active and thus actively performs OIS to compensate for vibrational motion of the camera 100 based on the motion signal $\omega$.

At step S301, the IS system 101 obtains a sequence / time-series of motion values / samples $\omega$ from the motion sensor 202. The motion samples $\omega$ are as discussed above passed through the filtering stage 204 to derive corresponding orientation samples $\theta$. Thus, the orientation samples $\theta$ are derived from the motion signal $\omega$ by integrating (and optionally low-pass filtering) the motion / angular rate samples $\omega$. At step S302, the IS system 101 obtains a sequence / time-series of position values / samples $v$ sampled from the position sensor 112. The orientation samples $\theta$ and the position samples $v$ obtained at steps S301 and 5302 are sequentially input to the residual block 230. The residual block 230, in turn, at step S303 determines a sequence / time-series of residuals $r$ based on the respective time-series of samples $\theta$ and position samples $v$.

While Fig. 4 shows steps S301, S302 and S303 after one another, it is to be understood that these steps are performed in parallel, and further in parallel with the capturing of the sequence of video frames F. Thus, the orientation samples $\theta$ and position samples $v$ are obtained in parallel, such that each video frame is associated with at least one respective orientation sample $\theta$ and position sample $v$. Hence, the residual block 230 may determine at least one residual $r$ for each video frame, such that each video frame is associated with at least one residual $r$. By a sample or value (such as an orientation sample $\theta$, position sample $v$ or a residual value $r$) being "associated with" a respective or given video frame, is hereby meant that the value/sample is time-aligned with the video frame. More specifically, a value/sample may be considered time-aligned with a given video frame when the value/sample is obtained for a time / sampling instant $t_i$ overlapping or coinciding with recording / capture of the video frame.

Each residual $r$ is determined based on a respective pair of an orientation sample $\theta$ and a position sample $v$ associated with a same video frame. A respective pair of an orientation sample $\theta$ and a position sample $v$ may more specifically refer to a temporally corresponding or time-aligned pair of samples $\theta$ and $v$, i.e., a respective pair of samples $\theta$ and $v$ obtained from their respective signals concurrently, such that the pair of samples $\theta$ and $v$ reflect a state of the camera 100 and OIS system 104 at a same time instant, or at least substantially concurrent time instants within the limits of the temporal resolution defined by the sampling rates of the motion and position sensors 202, 112.

For ease of explanation, it is in the following assumed that the sampling rates of the respective time-series of motion samples $\omega$, orientation samples $\theta$, and position samples $v$ are equal, and further that their respective samples are substantially time-aligned, such that for each time / sampling instant $t_i$ of a motion sample $\omega(t_i)$, there is a temporally corresponding orientation sample $\theta(t_i)$ and position sample $v(t_i)$. Thus, a residual $r$ may be determined for a given time instant / sampling instant $t_i$ based on the motion sample $\omega(t_i)$ and the position sample $v(t_i)$, and accordingly denoted $r(t_i)$. Typically, the sampling rates of the time-series $\omega$, $\theta$ and $v$ may exceed the frame rate of the sequence of video frames F (otherwise the OIS system 104 may not be able to compensate for vibrational frequencies causing blurring of individual video frames). Hence, each video frame may typically be associated with a respective subset of motion samples $\omega$, a respective subset of orientation samples $\theta$, and a respective subset of position samples $v$. However, to further facilitate understanding of general principles of the DIS approach according to the present disclosure, the further simplifying assumption is made that the sampling rates of the time-series $\omega$, $\theta$ and $v$ are equal to the frame rate of the sequence of video frames F, such that one motion sample $\omega$, one orientation sample $\theta$, and one position sample $v$ is associated with each video frame, and thus one residual $r$ may be determined for each video frame. The following discussion is however also applicable to a scenario wherein the sampling rates of the time-series $\omega$, $\theta$ and $v$ exceed the frame rate of the sequence of video frames F, but where the residual block 230 down-samples the time-series $\theta$ and $v$ to obtain respective down-sampled counterparts to the time-series $\theta$ and $v$ with a sampling rate equal to the frame rate of the sequence of video frames, such that the residual block 230 obtains one orientation sample $\theta$, and one position sample $v$ for each video frame, wherein the residual block 230 may determine one residual $r$ for each video frame. While these assumptions are intended for ease of explanation and understanding, since the DIS system 124 may be better suited to compensate for lower vibrational frequencies than compensated for by the OIS system 104, it may anyhow suffice to determine the residuals $r$ at the frame rate of the video sequence F.

Given the above assumptions, the residual block 230 sequentially determines new residuals $r$, thereby, over time, providing a time-series or residuals $r$, wherein each residual $r$ is associated with a respective video frame. To facilitate determining a residual $r$ being representative or indicative of an OIS error at a given time instant, the residual block 230 comprises an angle-to-position block 232. The angle-to-position block 232 implements a transform analogous to the angle-to-position function discussed above with reference to the setpoint controller 106. Thus, the angle-to-position block 232 maps the orientation samples $\theta$ to the coordinate system of the position samples $v$ output by the position sensor 112. The output of the angle-to-position block 232, i.e., the mapped representation of a given orientation sample $\theta$, is in Fig. 3 denoted $v'$. The residual $r$ is subsequently determined as a difference (e.g., by difference block 234) between the mapped position sample $v'$ and its associated (time-aligned) position value $v$. While in Fig. 3, the residual $r$ is determined by subtracting the $v$ from $v'$, the opposite is equally possible. In general, for the purpose of utilizing the residual $r$ during the DIS as described below, the magnitude of the residual $r$ is sufficient. Thus, the residual $r$ may be determined as the absolute value of the difference between $v$ and $v'$. Further, while in Fig. 3 the residual block 230 implements an angle-to-position function for mapping orientation samples $\theta$ to the coordinate system of the position samples $v$, it is equally possible for the residual block 230 to instead implement a position-to-angle function mapping the position samples $v$ into corresponding angles, i.e., in the coordinate system of the orientation samples $\theta$. It is further possible to map both the orientation samples $\theta$ and the position samples $v$ using respective transform adapted such the orientation samples $\theta$ and the position samples $v$ are mapped to some other common coordinate system, wherein the residuals $r$ may be determined by determining the difference between mapped orientation and position samples in the common coordinate system. For example, the orientation samples $\theta$ and the position samples $v$ may each be mapped to respective pixel coordinates such that each residual represents the instantaneous OIS error in terms of units of pixels.

The discussion is here focused chiefly on determining a residual r based on an orientation sample $\theta$ (derived from an angular rate motion sample $\omega$) and a position sample $v$. However, it is contemplated that a residual r may be determined in an analogous manner also in an IS system utilizing an accelerometer to provide the motion signal. Thus, linear position samples may be derived from linear acceleration samples (e.g., by performing a double integration of the linear acceleration samples in filtering stage 204). A residual r may accordingly be determined for each respective video frame based on a derived linear position sample and a position sample $v$ obtained from the position sensor 112 and associated with the respective video frame. The above discussed angle-to-position function used by the residual block 230 would in this case be replaced with some other suitable transform adapted to map the linear position sample and position sample $v$ to a common coordinate system.

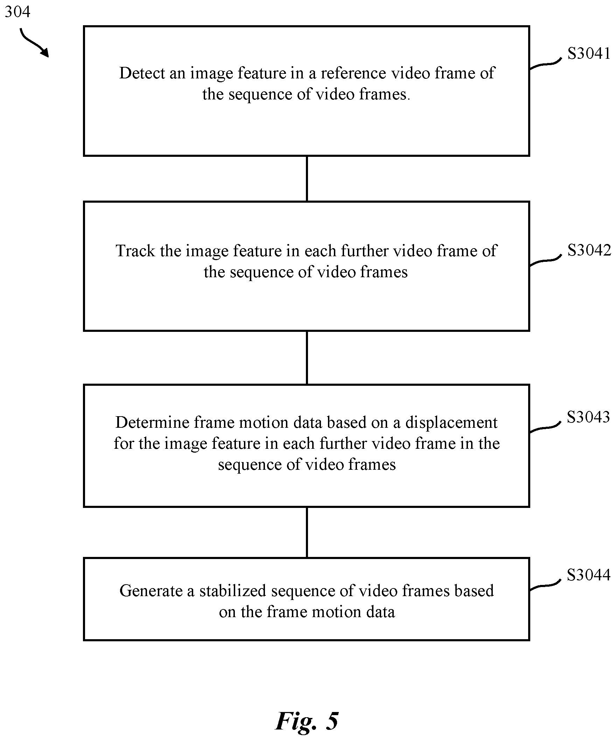

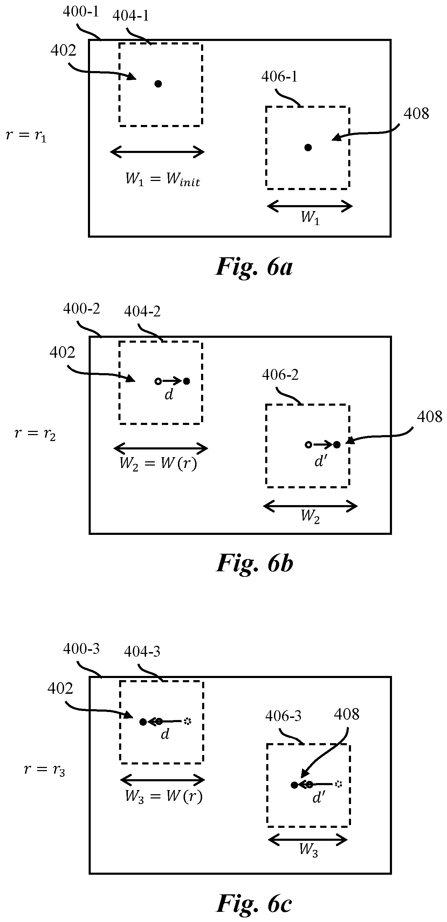

Returning to Fig. 3, the residuals $r$ determined by the residual block 230 are as shown provided to the DIS system 124, wherein the DIS system 124 at step S304 performs DIS on the sequence of video frames F, as further discussed below. Step S304 comprises a number of sub-steps, to be described with further reference to the flow chart of Fig. 5 and Fig. 6a-c schematically showing respective video frames 400-1, 400-2 and 400-3 of the sequence of video frames F. Video frame 400-1 defines a reference video frame, while video frames 400-2 and 400-3 define respective further video frames of the sequence of video frames. The reference video frame 400-1 may here be a first video frame of a sub-sequence of video frames within a context window of video frames (e.g., defined by a number of video frames) over which one or more image features are tracked as part of the DIS, as set out below.

At step S3041, the DIS system 124 detects, i.e., identifies, an image feature 402 in the reference video frame 400-1, as shown in Fig. 6a. The image feature 402 is here shown in a schematic manner as a single feature point. The feature point may for example correspond to a corner detected in the video frame 400-1. However, the image feature 402 is not limited specifically to a corner, but may also be an edge, a blob, etc., depending on the type of feature detection algorithm. For instance, the image feature 402 may be detected using an edge detection algorithm, a corner detection algorithm (e.g., Shi-Tomasis or Harris corner detection), a Scale-Invariant Feature Transform (SIFT), Speeded-Up Robust Features (SURF), or some other suitable feature detection algorithm. As further discussed below, step S3041 is not limited to detecting a single image feature (e.g., a single feature point) but may typically comprise detecting two or more image features to be individually tracked, wherein the image feature 402 may be referred to as a first image feature 402. The feature detection may be implemented by a feature detector block (not individually shown) of the DIS system 124. The feature detection may be applied to the full image area, or selectively to a region of interest, of the reference video frame. Since DIS typically involves cropping, the region of interest may for example be centered within the reference video frame and be of a size matching or smaller than the size of the cropping area.

At step S3042, the DIS system 124 proceeds to track the (first) image feature 402 in the further video frames, as shown for the further video frames 400-2 and 400-3 in Fig. 6b-c. The image feature 402 (e.g., corner or other feature point) detected in the reference video frame 400-1 may accordingly be tracked across the further successive video frames, including video frames 400-2, 400-3 (and further successive video frames within the context window). The feature tracking may be implemented by a feature tracking block (not individually shown) of the DIS system 124. The image feature 402 may be tracked using any conventional suitable feature tracking algorithm. Examples include object trackers such as a Kalman filtering-based object tracker, and feature tracking algorithms based on optical flow analysis such as the Lucas-Kanade method. What is common when applying any of these feature tracking algorithms in the present method, is that the tracking algorithms are confined to conduct the feature tracking within a tracking window associated with the detected image feature 402. Furthermore, the size of the tracking window is set based on the residuals r associated with the video frames, as determined by the residual block 230.

Fig. 6a schematically shows a tracking window 404-1 including the image feature 402. The tracking window 404-1 is for simplicity of square shape with a size defined by the width $W_1$. Since the reference video frame 400-1 here is assumed to be the first video frame, the tracking window 404-1 may here be set to an initial size $W_1 = W_{init}$. It is noted that the size of the tracking window 404-1 relative the video frame 404 is not drawn to scale and typically will cover a considerably smaller area of the video frame 404 than depicted. A suitable initial size for the tracking window 404-1 may be 8x8 pixels, 16x16 pixels, 32x32 pixels 64x64 pixels, or 128x128 pixels, as a few non-limiting examples. Also a non-square rectangular tracking window 404-1 is possible. In general, the initial size of the tracking window 404-1 may depend on factors such as the resolution of the video frames, available memory and processing resources, etc. As an alternative to setting the tracking window 404-1 to a fixed initial size $W_1 = W_{init}$, the size of the tracking window 404-1 may also be based on the residual $r = r_1$ associated with the reference video frame 400-1, e.g., such that $W_1 = W(r_1)$, as discussed below with reference to the further video frames 400-2, 400-3. In any case, the tracking window 404-1 may be positioned in the video frame 404-1 to enclose the image feature 402. The location of the tracking window 404-1 may for instance be determined by setting the center of the tracking window 404-1 to align with the location of the image feature 402. For example, where the image feature 402 is a feature point such as a corner, the center of the tracking window 404-1 may be set to the pixel coordinates of the image feature 402. In case of more general and/or complex image features, the center of the tracking window 404-1 may be set to the pixel coordinates of a center or centroid of the image feature 402.

In Fig. 6b, the feature tracking proceeds by applying the tracking algorithm to track the image feature 402 within a tracking window 404-2 of the further video image frame 400-2. The size of the tracking window 404-2 is here set based on the residual $r = r_2$ associated with the video frame 400-2, e.g., such that $W_2 = W(r_2)$, where $W$ is a function of the residual $r$. Various forms of the function $W$ are possible. Typically, the function $W$ is defined such that the size (e.g., width) of the tracking window increases with increasing residual $r$ (e.g., with increasing magnitude of the residual $r$). In a simple implementation, the function $W$ may be step function setting the tracking window to a first size responsive to the residual $r$ being less than a threshold and to a second size greater than the first size responsive to the residual $r$ exceeding the threshold, e.g.,

$$W(r) = \begin{cases} W_{small}, & r < T_r \\ W_{large}, & r \geq T_r \end{cases}$$

$$(\text{Eq. } 2)$$

According to a more refined size function, the size function $W$ may provide mapping between the residual $r$ and a plurality of sizes, e.g. based on a straight-line equation such as:

$$W(r) = \max \{W_0 + A * r, W_{min}\}$$

$$(\text{Eq. } 3)$$

where $W_0$ and $A$ is some suitable choice of coefficients, and $W_{min}$ is a predefined minimum tracking window size. The scaling factor $A$ may by way of example be understood as reflecting the trustworthiness of the residual $r$ in terms of accurately capturing the magnitude of the OIS error. The scaling factor $A$ may be determined taking into account factors such as the overall performance and speed of the OIS system 104, noise in the motion samples (e.g., gyro samples $\omega$), calibration errors, etc. It may be convenient to apply a rounding operation to the straight-line equation (e.g., by rounding to the nearest integer or using some other rounding function like a floor or ceiling function), to provide an integer window size. Eq. 3 may further be limited to ensure that the size of the tracking window size does not exceed a predefined maximum size $W_{max}$. Further, while the examples above adapt the size by setting the width $W$ of the square-shaped tracking window, it is also possible to define the function $W(r)$ to adapt both the height and width of a rectangular tracking window. It is noted that these examples are merely a few non-limiting examples and other definitions of the function $W(r)$ are also possible.

Regardless of the specific form of the function $W(r)$, the location of the tracking window 404-2 may be set to the same coordinates as the tracking window 404-1 of the previously processed video frame, which for the video frame 400-2 is the reference video frame 400-1. Having defined the tracking window 404-2 for the video frame 400-2, the feature tracking may be applied to the pixels within the tracking window 404-2.

For example, the image feature 402 may be tracked using optical flow analysis. The optical flow analysis is accordingly applied selectively to pixels within the tracking window 404-2 of the video frame 400-2. That is, the optical flow analysis may estimate the optical flow of pixels within the tracking window 404-2 relative to the preceding video frame 400-1 (e.g., the reference video frame 400-1). The location of the image feature 402 in the video frame 400-2 may subsequently be estimated by updating the pixel coordinates of the image feature 402 in the preceding video frame 400-1 according to the estimated optical flow, e.g., by adding the optical flow vector estimated by the optical flow analysis, to the coordinates of the image feature 402 in the preceding video frame 400-1. In case of an image feature 402 comprising more than one pixel (e.g., a blob), it is possible to update the pixel coordinates for each pixel of the image feature 402. However, it is also possible to update only a representative pixel coordinate of the image feature 402, such as a pixel coordinate of a center or centroid of the image feature 402. To further reduce the computational complexity, the pixel coordinate(s) of the image feature 402 may be updated using an average of the optical flow determined for the pixels within the tracking window 404-2.

An analogous approach may be applied to continue the tracking the image feature 402 in the successive further video frame 400-3. Upon applying a tracking operation to the further video frame 400-3, the size of the tracking window may be set based on the residual $r = r_3$ associated with the video frame 400-3, e.g., according to Eq. 2 or 3. Further, the location of the tracking window 404-3 may be set to the same coordinates as the tracking window 404-2 of the previously processed video frame 400-2. Thus, both the size of the tracking window and the location of the tracking window may be updated for each further video frame 400-2, 400-3, and onwards. However, variations of this approach are also possible.

For example, the size of the tracking windows may be updated for each further video frame 400-2, 400-3 based on their associated residuals $r_2$ and $r_3$, while the locations of the tracking windows are fixed to the location determined for the tracking window 404-1 in the reference video frame 400-1. Further, it is not necessary to update the size of the tracking windows for each further video frame 400-2, 400-3, etc. Instead, the size of the tracking windows may be updated only every other frame, every fourth frame, or even less often. It is also possible to determine the size of the tracking window for all video frames of the context window based on the residual $r = r_1$ of the reference video frame 400-1, such that $W_j = W(r_1)$, where $j$ is an index spanning the video frames of the context window.

The tracking operation as discussed above with reference to video frames 400-2 and 400-3 may be repeated until the image feature 402 has been tracked in all further video frames within the context window. At this stage, steps S3041 and S3042 may be repeated for a further sub-sequence of video frames of a new context window.

According to the above, a tracking window 404-1 may be determined already for the reference video frame 400-1. However, since no feature tracking needs to be applied to the reference video frame 400-1, it is not necessary to define a tracking window 404-1 already for the reference video frame 400-1. Instead, a tracking window may be initialized first for the first further video frame successive to the reference video frame 400-1 in which the image feature 402 detected in the reference video frame 400-1 is to be tracked. This would in the illustrated example be the further video frame 400-2. Also in this case, the size of the tracking window 404-2 may be set based on its associated residual $r = r_2$, e.g., such that $W_2 = W(r_2)$. The location of the tracking window 404-2 may be determined such that its center aligns with the (center or centroid of) the image feature 402 in the reference video frame 400-1. That is, the center coordinates of the tracking window 404-2 may be set to the coordinates of the image feature 402 in the reference video frame 400-1.

By the tracking of the image feature 402 at step S3042, a displacement $d$ of the of image feature 402 between successive video frames within the context window may be estimated. In Fig. 6b, the displacement $d$ of the feature point 402 in the video frame 400-2 (filled circle) is schematically indicated relative to the location of the feature point 402 in the preceding video frame 400-1 (un-filled circle). In Fig. 6c, the displacement $d$ of the feature point 402 in the video frame 400-3 (filled circle) is schematically indicated relative to the location of the feature point 402 in the preceding video frame 400-2 (dashed outline circles). It is noted that the displacement $d$ is only schematically indicated and not drawn to scale. For example, for a sequence of video frames captured with a frame rate of 25 frames per second or higher, the displacement $d$ between a pair of successive frames caused by camera vibrations not compensated for by the OIS system 104 may be as small as a few pixels. However, in the event of a large amplitude camera shake considerably larger displacements $d$ may occur frame-by-frame. Although in Fig. 6b-c, the respective displacement $d$ of the of image feature 402 in the video frames 400-2, 400-3 are indicated relative to the location of the image feature 402 in the preceding video frame, the displacements $d$ of the image feature 402 in the video frames 400-2, 400-3 may also be determined relative to the location of the image feature 402 in the reference video frame 400-1. In either case, the set of determined displacements $d$ determined for the video frames (e.g., within the context window) may be collected as displacement data.

Accordingly, at step S3043, the DIS system 124 proceeds to determine frame motion data based on displacement data comprising the respective displacements $d$ for the image feature 402 in each further video frame 400-2, 400-3 of the context window. Determining the frame motion data may comprise determining inter-frame motion data from the displacement data, indicating an estimated frame-to-frame motion of the camera 100.

To increase the likelihood that the frame motion data (which will be used to form the stabilized video sequence at step S3044 discussed below) reflects motion associated with vibrational motion of the camera 100 that is desirable to compensate for by DIS, determining the frame motion data may comprise filtering the displacement data comprising the displacements $d$. For instance, the displacement data may be subjected to high pass or band pass filtering in order to extract frequency components of interest from the displacements $d$ across the sequence of video frames F.

In the above, the steps of image feature detection (S3041) and image feature tracking (S3042) have been discussed with reference to the single first image features 402. However, step S3041 may comprise detecting more than one image feature in the reference video frame 400-1, wherein step S3042 accordingly may comprise tracking each of the detected image features across the further video frames 400-2, 400-3. This is schematically illustrated in Figs. 6a-c by a second image feature 408. Thus, at step S3041, a first image feature 402 (e.g., a first feature point corresponding to a first corner) and a second image feature 408 (e.g., a second feature point corresponding to a second corner) are detected in the reference video frame 400-1. The first and second image feature 402, 408 may for example be located in spaced apart pixel regions within the region of interest of the reference video frame 400-1, or within different non-overlapping regions of interest of the reference video frame 400-1. For instance, the first and second image feature 402, 408 may correspond to spaced apart respective objects depicted in the reference video frame 400-1. The first and second image features 402, 408 may in particular be spaced apart such that it is not possible to accommodate them within a same tracking window of a given size (e.g., $W_{init}$, $W_{large}$ or $W_{max}$). Accordingly, as shown in Fig. 6a, the second of image feature 408 is located in a tracking window 406-1, non-overlapping with the tracking window 404-1. Otherwise, the discussion of the tracking window 404-1 above applies correspondingly to the tracking window 406-1.

At step 3042, the DIS system 124 proceeds to track each of the first and second image feature 402, 408 across the further video frames 400-2, 400-3, as shown in Figs. 6a-c. The tracking is performed independently for each of the first and second image features 402, 408. Accordingly, in analogy with the tracking of the first image feature 402 discussed above, the tracking of the second image feature 408 is analogously performed within a respective tracking window 406-2, 406-3 of the further video frames 400-2, 400-3. The approaches for setting the sizes of the tracking windows 404-2, 404-3 discussed above may be applied in an analogous manner to setting the sizes of the tracking windows 406-2, 406-3.

Based on the tracking of the second image feature 408, corresponding respective displacements $d'$ may be determined for the second image feature 408. The displacements $d$ and $d'$ may each be collected as the displacement data. Thus, at step S3043, the DIS system 124 proceeds to determine frame motion data based on the displacement data comprising each of the respective displacements $d$ and $d'$ for the first and second image features 402, 408 in each further video frame 400-2, 400-3 of the context window. A benefit of determining the frame motion data based on displacement data derived from tracking more than one image feature, is that statistics may be applied to determine frame motion data of increased reliability. For example, determining the frame motion data may comprise averaging the respective displacements $d$ and $d'$ determined for the respective image features 402, 408 in each further video frame 400-2, 400-3. The averaged displacement data may in turn be subjected to filtering (e.g., high pass or band pass) as discussed above in order to obtain filtered final frame motion data to base the subsequent DIS on.

As may be appreciated, an analogous approach may be applied to set of image features comprising any number of image features, such as two, three or more, wherein, at step S3042, each of the image features may be individually tracked using a respective tracking window and, at step S3043, frame motion data may be determined based on respective displacements of each of the tracked image features, e.g., by averaging the respective displacements of each of the tracked image features for each further video frame 400-2, 400-3. For example, step S3041 may comprise detecting the N strongest corners in the reference video frame 400-1 and thus at step S3042 proceed to individually track each of the N corners.

At step S3044, the DIS system 124 proceeds to generate a stabilized sequence of video frames F' based on the frame motion data. Various image processing-based techniques for performing digital image stabilization on a sequence of video frames based on frame motion data indicating frame-by-frame motion is per se known in the art. As one non-limiting example, the DIS may generate a stabilized sequence of video frames F' by applying an image transform to the sequence of video frames 400-1, 400-2, 400-3 in the form of an image crop, wherein the location of the crop in each video frame 400-1, 400-2, 400-3 is shifted between successive video frames in accordance with the frame motion data. By shifting the location of the crop, the tracked sets of image features 402, 408 may be kept steady within the image area of the cropped video frames. Cropping is however only one example of an image transform suitable for DIS, and other more complex types of DIS transforms may be implemented in addition, or instead, such as DIS transforms compensating for roll and/or skew.

In the above, the method 300 has been described with reference to a single sensing axis of the motion sensor 202, and a position sensor 112 determining a position of the movable element (e.g., lens 118) with respect to a single sensing axis corresponding to / associated with a compensation axis of the OIS system 104. However, the present disclosure is applicable also to implementations utilizing more than one sensing and compensation axis, such as two sensing axes (e.g., pitch and yaw) of the motion sensor 202 and two corresponding sensing axes of the position sensor 112 and compensation axes of the OIS system. For example, the motion sensor 202 may in such an implementation provide a respective motion signal (first and second motion signal) indicating an angular rate about each sensing axis, each corresponding to the single motion signal $\omega$. Thus, the method 300 may at step S301 comprise obtaining a sequence of first motion values sampled from the first motion signal of a first sensing axis (e.g., pitch) of the motion sensor 202, and a sequence of second motion values sampled from the second motion signal of a second sensing axis (e.g., yaw) of the motion sensor 202. A respective orientation signal (first and second orientation signal) may be derived from each motion signal / sequence of motion values (e.g., by integration and optionally filtering). Correspondingly, the position sensor 112 may comprise a first and second sensing axis, each providing a respective position signal (first and second position signal) indicating a position of the movable element (lens 118 or image sensor 122) with respect to the respective sensing axis of the position sensor 112. Thus, the method 300 may at step S302 comprise obtaining a sequence of first position values sampled from the first position signal of the first sensing axis (e.g., a first axis of a Hall sensor) of the position sensor 112, and a sequence of second position values sampled from the second position signal of the second sensing axis (e.g., a second axis of the Hall sensor) of the position sensor 112. The residual block 230 may be correspondingly adapted to determine (e.g., at step S303 of the method 300) a sequence of residual motion vectors (hereinafter termed residual vector) for the sequence of video frames, wherein each residual motion vector is determined based on the first and second motion values and the first and second position values associated with the respective video frame. Each residual motion vector may comprise a first component with a first residual motion value and a second component with a second residual motion value, wherein the first and second residual motion values indicate a residual motion (i.e., the OIS error) of the camera 100 along a first and second compensation axis, respectively, of the OIS system 104.

If the first and second sensing axes of the motion sensor 202, and the first and second sensing axes of the position sensor 112 are aligned with respect to each other, the first position value of the first component of a residual motion vector associated with a given video frame may be determined based on the first motion value and the first position value associated with the given frame. Correspondingly, the second position value of the second component of the residual motion vector may be determined based on the second motion value and the second position value associated with the given frame. The residual block 230 may in this case apply a respective angle-to-position function, or any of the other mappings set out above, to the first motion and/or position values and the second motion and/or position values, respectively, so as to map the first motion and position values to a common coordinate system and the second motion and position values to a common coordinate system. Thereby, the first and second residuals may be determined by determining the difference between the respective mapped orientation and position values.

The residual motion vectors may be used in different ways. For example, the residual block 230 may determine, for each respective video frame, a representative residual value based on the values of the first and second components of the residual vector associated with respective video frame. The representative residual value may for instance be determined as the maximum value of the magnitude of the first component and the magnitude of the second component of the residual vector. Thus, the residual block 230 may determine, for each respective video frame, a representative residual value as the magnitude of the residual vector.

The residual block 230 may alternatively determine a residual vector for each video frame and output the same to the DIS system 124. The DIS system 124 may accordingly use the components of the residual vector (i.e., the first and second residual motion values) during the tracking step S3042, to set a first dimension (e.g., the width) of the tracking window for a given video frame based on the first residual of the residual vector, and a second dimension (e.g., height) of the tracking window based on the second residual of the residual vector. The first and second dimensions may for instance each be determined using respective functions of a same form as discussed above with reference to the function $W$, e.g., analogous to Eq. 2 or 3. This example assumes that the first component and the second component of the residual vectors correspond to or align with a horizontal axis and a vertical axis, respectively, of the image sensor 122, and thus to / with the X- and Y-axis of the video frames, i.e., defining the width and height dimensions of the video frames. More generally, the residual block 230 or the DIS system 124 may apply a coordinate transform (e.g., a 2D rotation transform) to the first and second components of the residual vectors such that the residual vectors are mapped to the X- and Y- axis of the respective video frames.

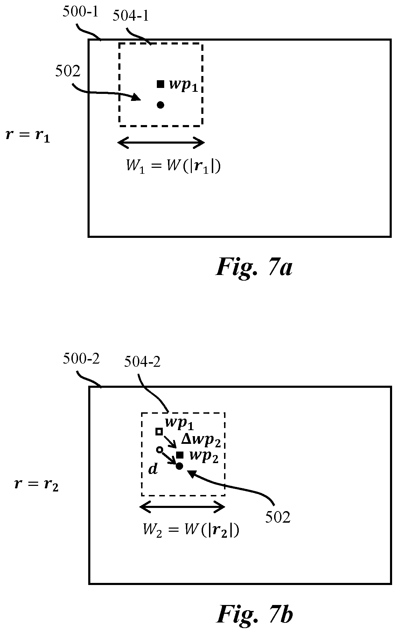

According to a further example, a residual vector may also be used to update the location of the tracking window during the course of tracking one or more image features across the above-mentioned sequence of video frames F. Fig. 7a-b illustrates such an approach with reference to first and second successive video frames 500-1, 500-2. The first and second video frames 500-1, 500-2 may here be any pair of successive video frames of the sequence (e.g., the sub-sequence) of video frames F. The first video frame 500-1 may correspond to the reference video frame 400-1 of Fig. 6a, but may also correspond to any successive further video frame of the sequence F. The first video frame 500-1 is associated with a first residual vector $r = r_1 = (r_{11}, r_{12})$, where $r_{11}$ is the first component (e.g., the motion residual with respect to the yaw axis and the X-dimension of the video frame 500-1) and $r_{12}$ is the second component (e.g., the motion residual with respect to the pitch axis and the Y-dimension of the video frame 500-1) of the residual vector $r_1$. The second video frame 500-2 is associated with a second residual vector $r = r_2 = (r_{21}, r_{22})$, where $r_{21}$ is the first component (e.g., the motion residual with respect to the yaw axis and the X-dimension of the video frame 500-2) and $r_{22}$ is the second component (e.g., the motion residual with respect to the pitch axis and the Y-dimension of the video frame 500-2) of the residual vector $r_2$. The first and second components of the first and second residual vectors $r_1$, $r_2$ may be determined in the same manner as discussed with reference to the preceding example. Fig. 7a shows for simplicity a single image feature 502 being tracked. The location (e.g., pixel coordinates) of the center of the tracking window 504-1 in the video frame 500-1 is $wp_1 = (w_{x1}, w_{y1})$. The image feature 502 is here by way of example depicted slightly displaced relative to the center of the tracking window 504-1.

As set out above with reference to step S3042, the DIS system 124 proceeds to track the image feature 502 in the second video frame 500-2. Here, instead of setting the location of the tracking window 504-2 in the second video frame 500-2 to the coordinates of the tracking window 504-1 in the first video frame 500-1, the DIS system 124 determines an updated location of the tracking window 504-2 based on its associated second residual vector $r_2$. More specifically, the updated location of the tracking window 504-2 is determined by computing a tracking window displacement vector $\Delta wp_2$ and determining the updated location of the tracking window 504-2 by adding the displacement vector $\Delta wp_2$ to the location $wp_1$ of the tracking window 504-1, e.g.,

$$wp_2 = (w_{x2}, w_{y2}) = wp_1 + \Delta wp_2$$

$$(\text{Eq. 4})$$

The displacement vector $\Delta wp_2$ may be determined based on the second residual vector $r_2$ associated with the

second video frame 400-2 and a scaling factor, e.g.,

$$\Delta \boldsymbol{wp_2} = \left( \Delta w_{x2}, \Delta w_{y2} \right) = 1/R_s * \boldsymbol{r_2}$$

(Eq. 5)

where $R_s$ is the scaling factor. The scaling factor $R_s$ may be a predetermined scaling factor, typically greater than 1 such that the displacement vector $\Delta \boldsymbol{wp_2}$ will be determined as a fraction of the residual vector $\boldsymbol{r_2}$. The scaling factor $R_s$ may by way of example be understood as reflecting the trustworthiness of the residual vectors $\boldsymbol{r}$ in terms of accurately capturing the direction of the OIS error. The scaling factor $R_s$ may be determined taking into account factors such as the overall performance and speed of the OIS system 104, noise in the motion samples (e.g., gyro samples $\omega$), calibration errors, etc. Subsequent to determining the updated location $\boldsymbol{wp_2}$ of the tracking window 504-2, the feature tracking may be applied to the pixels within the tracking window 504-2 as set out above.

Optionally, also the size of the tracking window 504-1, 504-2 in the first and second video frames 500-1, 500-2 may be updated based on the respective residual vectors $\boldsymbol{r_1},\boldsymbol{r_2}$ associated with the video frames 500-1, 500-2, either individually for the first and second dimensions (e.g., width and height) as discussed above, or as shown in Fig. 7a-b, collectively based on the respective magnitudes of their associated residual vectors, e.g., $|\boldsymbol{r_1}|$ and $|\boldsymbol{r_2}|$. In the latter case, the size of the tracking windows 504-1, 504-2 may for example be determined according to Eq. 2 or Eq. 3 using $r_1 = |\boldsymbol{r_1}|$ for the video frame 500-1 and $r_2 = |\boldsymbol{r_2}|$ for the video frame 500-2.

Having tracked the image feature 502 in the second video frame 500-2, the displacement $\boldsymbol{d}$ (in Fig. 7b indicated as a vector) of the image feature 502 between the first and second video frames 500-1, 500-2 may be estimated. The displacement $\boldsymbol{d}$ may be collected as displacement data and subsequently be used to determine the frame motion data as set out above with reference to step S3043.

The method may further proceed in a corresponding manner for any further successive frames of the sequence of video frames F. The location (and size) of the tracking window may be updated as set out above for each successive frame, or less frequently, such as only every other frame, every fourth frame, or less.

It is to be noted that the approach discussed with reference to Fig. 7a-b may be applied to any chosen number of detected and tracked image features.

The various operations and blocks involved in controlling an IS system discussed herein, such as the IS system 101 including the OIS system 104 or 104' and the DIS system 124, may be implemented in both hardware and software. In a software implementation, the image capturing device, e.g. the camera 100, may comprise a processing device realized in the form of one or more processors, such as one or more central processing units, which in association with computer program code instructions stored on a (non-transitory) computer-readable medium, such as a non-volatile memory, causes the processing device to carry out the method steps for controlling the IS system. Examples of non-volatile memory include read-only memory, flash memory, ferroelectric RAM, magnetic computer storage devices, optical discs, and the like. In a hardware implementation, the processing device may instead be realized by dedicated circuitry configured to implement the method steps for controlling the IS system. The circuitry may be in the form of one or more integrated circuits, such as one or more application specific integrated circuits (ASICs) or one or more field-programmable gate arrays (FPGAs). It is to be understood that it is also possible to have a combination of a hardware and a software implementation, meaning that some method steps may be implemented in dedicated circuitry and others in software.

The steps of the method 300 discussed above with reference to Fig. 4-5, step S304 and sub-steps S3041-S3041, are well-suited for an implementation of on-device DIS in an edge device with constrained processing resources, such as a surveillance camera. By confining the feature tracking to a tracking window with a dynamically adjusted size (based on an OIS error estimated in real-time), the amount of pixel data that needs to be analyzed to facilitate the feature tracking may be limited. Further, basing the DIS on frame motion data derived from tracking image features across captured video frames enables a precise and effective DIS. Further benefits of the method have been discussed in the above.

The person skilled in the art realizes that the present invention by no means is limited to the examples described above. On the contrary, many modifications and variations are possible within the scope of the appended claims.

For example, in the illustrated example implementations discussed above, it was assumed that one motion sample $\omega$, one orientation sample $\theta$, one position sample $v$, and one residual $r$ is associated with each video frame (e.g., per sensing axis of the motion sensor and position sensor). However, in contemplated implementations of the method and the IS system 101, the sampling rate of the motion and position values will typically exceed a frame rate of the sequence of video frames, such that the sequence of motion values and the sequence of position values may each comprise a respective subset of motion values and position values, respectively, for each video frame. Thus, each video frame may be associated with a respective subset of motion values of the sequence of motion values, and further with a respective subset of position values of the sequence of position values. Accordingly, the method may comprise determining, for each respective video frame, a subset of residual motion values based on the subset of motion values and the subset of position values associated with the respective video frame. There are various approaches for utilizing such a subset of residual motion values.

In some embodiments, a representative (i.e., single) residual motion value representative for the video frame may be determined based on the subset of residual motion values associated with the video frame, for instance as an average or a maximum of the subset of residual motion values, to obtain a sequence of representative residual motion values. To illustrate, with reference to Fig. 6a-c, a first subset of residual motion values $\{r_{11}, r_{12} ...\}$ may be associated with the reference video frame 400-1, a second subset of residual motion values $\{r_{21}, r_{22} ...\}$ may be associated with the further video frame 400-2, a third subset of residual motion values $\{r_{31}, r_{32} ...\}$ may be associated with the further video frame 400-3, and so on. A representative residual motion value for the reference video frame 400-1 may be determined as the average of the first subset of residual motion values $\{r_{11}, r_{12} ...\}$, a representative residual motion value for the further video frame 400-2 may be determined as the average of the second subset of residual motion values $\{r_{21}, r_{22} ...\}$, a representative residual motion value for the further video frame 400-3 may be determined as the average of the third subset of residual motion values $\{r_{31}, r_{32} ...\}$, and so on. Hence, during the DIS, a size of the tracking window may be set based on the sequence of representative residual motion values, e.g., the average residuals determined for the video frames 400-1, 400-2, 400-3.

In some embodiments, each residual motion value of the subset of residual motion values may be associated with a respective subset of pixel rows of the respective video frame, wherein the size of the tracking window used for tracking the feature point(s) in each respective further video frame may be set based on the respective residual motion value associated with the subset of pixel rows of the respective video frame comprising the feature point(s). Hence, the size of the tracking window may be controlled in dependence on the residual motion value associated with the subset of pixel rows comprising each feature point within the respective video frame. It may be beneficial to combine this approach with determining frame motion data comprising a respective subset of pixel row motion data associated with each subset of pixel rows of each further video frame. This may allow the DIS to generate the stabilized sequence of video frames by applying a motion compensation transform individually to each subset of pixel rows based on its associated subset of pixel row motion data, e.g., in addition to a cropping transform as discussed above.

## Claims

1. A method for performing digital image stabilization on a sequence of video frames (F) captured by an image capturing device (100), the image capturing device (100) comprising: a motion sensor (102, 202) configured to output a motion signal indicating motion of the image capturing device (100), an optical image stabilization, OIS, system (104) configured to compensate for motion of the image capturing device (100) by controlling a position of a movable element (118) of the OIS system (104) based on the motion signal, and a position sensor (112) configured to output a position signal indicating an instantaneous position of the movable element (118), the method comprising:

    obtaining (S301) a sequence of motion values sampled from the motion signal while capturing the sequence of video frames such that each video frame is associated with a respective motion value;
    obtaining (S302) a sequence of position values sampled from the position signal while capturing the sequence of video frames such that each video frame is associated with a respective position value;
    determining (S303), for each respective video frame, a residual motion value to obtain a sequence of residual motion values for the sequence of video frames, wherein each residual motion value is determined based on the motion value and the position value associated with the respective video frame and indicates a residual motion of the image capturing device (100) upon capturing the respective video frame not compensated for by the OIS system (104); and
    performing digital image stabilization on the sequence of video frames (F), comprising:

        detecting (S3041) an image feature (402) in a reference video frame (400-1) of the sequence of video frames;
        tracking (S3042) the image feature (402) in each further video frame (400-2, 400-3) of the sequence of video frames;
        determining (S3043) frame motion data based on a displacement for the image feature (402) in each further video frame (400-2, 400-3) in the sequence of video frames; and
        generating (S3044) a stabilized sequence of video frames (F') based on the frame motion data;
        wherein a size of a tracking window (404-2, 404-3) for tracking the image feature (402) in each further video frame (400-2, 400-3) is set based on the sequence of residual motion values.

2. The method according to claim 1, wherein determining each residual motion value comprises determining based on the motion value associated with the respective video frame a corresponding orientation value indicating an estimated instantaneous orientation of the image capturing device upon capturing the respective video frame, and determining the residual motion value based on the orientation value and the position value.

3. The method according to claim 2, wherein the residual motion value is determined based on a difference between the orientation value and the position value when mapped to a common coordinate system.

4. The method according to any one of claims 2-3, wherein the motion signal indicates an angular rate and the orientation values are derived by integrating the motion signal.

5. The method according to any one of the preceding claims, wherein tracking the image feature comprises using optical flow analysis, wherein the optical flow analysis is applied selectively to pixels within the tracking window of each further video frame.

6. The method according to any one of the preceding claims, wherein the size of the tracking window for each further video frame is set based on the residual motion value associated with the further video frame.

7. The method according to any one of the preceding claims, wherein the size of the tracking window is set to increase with increasing residual motion values.

8. The method according to claim 6 or 7, wherein the tracking window is set to a first size responsive to the residual motion value being less than a threshold and to a second size greater than the first size responsive to the residual motion value exceeding the threshold.

9. The method according to any one of the preceding claims, wherein the movable element is a movable optical element (118) of the optical image stabilization system (104), or wherein the movable element is an image sensor (122) of the image capturing device (100).

10. The method according to any one of the preceding claims, wherein a location of the tracking window (404-2, 404-3) for tracking the image feature (402) in each respective further video frame (400-2, 400-3) is determined based on the location of the tracking window (404-2, 404-3) in a preceding video frame (400-1, 400-2) of the video sequence (F), and the residual motion value associated with the respective further video frame (400-2, 400-3).

11. The method according to claim 10, wherein:

the sequence of motion values is a sequence of first motion values sampled from a first motion signal of a first sensing axis of the motion sensor (202) and the method further comprises obtaining a sequence of second motion values sampled from a second motion signal of a second sensing axis of the motion sensor (202) while capturing the sequence of video frames such that each video frame is further associated with a respective second motion value,

the sequence of position values is a sequence of first position values sampled from a first position signal of a first sensing axis of the position sensor (112) and the method further comprises obtaining a sequence of second position values sampled from a second position signal of a second sensing axis of the position sensor (112) while capturing the sequence of video frames such that each video frame is further associated with a respective second position value,

and the method comprises:

determining, for each respective video frame, a residual motion vector to obtain a sequence of residual motion vectors for the sequence of video frames, wherein each residual motion vector is determined based on the first and second motion values and the first and second position values associated with the respective video frame, wherein each residual motion vector comprises a first component with a first residual motion value and a second component with a second residual motion value, and wherein the first and second residual motion values indicate a residual motion of the image capturing device (100) along a first and second compensation axis, respectively, of the OIS system (104) not compensated for by the OIS system (104) upon capturing the respective video frame, and

wherein the location of the tracking window (404-2, 404-3) for tracking the image feature (402) in each respective further video frame (400-2, 400-3) is determined based on the location of the tracking window (404-2, 404-3) in a preceding video frame (400-1, 400-2) of the video sequence (F), and the residual motion vector associated with the respective further video frame (400-2, 400-3).

12. The method according to any one of the preceding claims, wherein the image feature (402) is a first image feature detected in the reference video frame (400-1), and wherein performing the digital image stabilization on the sequence of video frames (F) comprises:

further detecting (S3041) at least a second image feature (408) in the reference video frame (400-1) of the sequence of video frames;
tracking (S3042) the first and second image features (402, 408) in each further video frame (400-2, 400-3) of the sequence of video frames; and
determining (S3043) the frame motion data based on a respective displacement of the first and second image features (402, 408) in each further video frame (400-2, 400-3) in the sequence of video frames;
wherein a size of a respective tracking window (404-2, 404-3) for tracking the first and second image features (402, 408) in each further video frame (400-2, 400-3) is set based on the sequence of residual motion values.

13. The method according to any one of the preceding claims, wherein the motion sensor comprises a gyroscope (202), and/or wherein the position sensor (112) comprises a Hall effect sensor.

14. An image capturing device (100) comprising:

a motion sensor (102, 202) configured to output a motion signal indicating motion of the image capturing device (100);
an optical image stabilization, OIS, system (104, 104') configured to compensate for motion of the image capturing device (100) by controlling a position of a movable element of the OIS system (104, 104') based on the motion signal;
a position sensor (112) configured to output a position signal indicating a position of the movable element; and
a processing device configured to perform the method of any one of the preceding claims.

15. A computer program product comprising computer program code portions configured to perform the method of any one of claims 1-13, when executed by a processing device.

**Amended claims in accordance with Rule 137(2) EPC.**

1. A method for performing digital image stabilization on a sequence of video frames (F) captured by an image capturing device (100), the image capturing device (100) comprising: a motion sensor (102, 202) configured to output a motion signal indicating motion of the image capturing device (100), an optical image stabilization, OIS, system (104) configured to compensate for motion of the image capturing device (100) by controlling a position of a movable element (118) of the OIS system (104) based on the motion signal, and a position sensor (112) configured to output a position signal indicating an instantaneous position of the movable element (118), the method comprising:

obtaining (S301) a sequence of motion values sampled from the motion signal while capturing the sequence of video frames;
obtaining (S302) a sequence of position values sampled from the position signal while capturing the sequence of video frames;
wherein a sampling rate of the motion and position values exceed a frame rate of the sequence of video frames, such that the sequence of motion values and the sequence of position values each comprise a respective subset of motion values and position values, respectively, for each video frame, wherein each video frame is associated with a respective subset of motion values of the sequence of motion values, and further with a respective subset of position values of the sequence of position values, and the method further comprising:

determining (S303), for each respective video frame, a subset of residual motion values to obtain a sequence of residual motion values for the sequence of video frames, wherein each subset of residual motion values is determined based on the subset of motion values and the subset of position values associated with the respective video frame, wherein each residual motion value of each subset of residual motion values is associated with a respective subset of pixel rows of the respective video frame and indicates a residual motion of the image capturing device (100) upon capturing the respective subset of pixel rows of the respective video frame not compensated for by the OIS system (104); and
performing digital image stabilization on the sequence of video frames (F), comprising:

detecting (S3041) an image feature (402) in a reference video frame (400-1) of the sequence of video frames;

tracking (S3042) the image feature (402) in each further video frame (400-2, 400-3) of the sequence of video frames;

determining (S3043) frame motion data based on a displacement for the image feature (402) in each further video frame (400-2, 400-3) in the sequence of video frames; and

generating (S3044) a stabilized sequence of video frames (F') based on the frame motion data;

wherein a size of a tracking window (404-2, 404-3) for tracking the image feature (402) in each further video frame (400-2, 400-3) is set based on the respective residual motion value associated with the subset of pixel rows of the respective video frame comprising the image feature (402).

2. The method according to claim 1, wherein tracking the image feature comprises using optical flow analysis, wherein the optical flow analysis is applied selectively to pixels within the tracking window of each further video frame.

3. The method according to any one of the preceding claims, wherein the size of the tracking window is set to increase with increasing residual motion values.

4. The method according to claim 3, wherein the tracking window is set to a first size responsive to the residual motion value being less than a threshold and to a second size greater than the first size responsive to the residual motion value exceeding the threshold.

5. The method according to any one of the preceding claims, wherein the movable element is a movable optical element (118) of the optical image stabilization system (104), or wherein the movable element is an image sensor (122) of the image capturing device (100).

6. The method according to any one of the preceding claims, wherein the motion sensor comprises a gyroscope (202), and/or wherein the position sensor (112) comprises a Hall effect sensor.

7. An image capturing device (100) comprising:

a motion sensor (102, 202) configured to output a motion signal indicating motion of the image capturing device (100);

an optical image stabilization, OIS, system (104, 104') configured to compensate for motion of the image capturing device (100) by controlling a position of a movable element of the OIS system (104, 104') based on the motion signal;

a position sensor (112) configured to output a position signal indicating a position of the movable element; and

a processing device configured to perform the method of any one of the preceding claims.

8. A computer program product comprising computer program code portions configured to perform the method of any one of claims 1-6, when executed by a processing device.

**Fig. 1**

100

101

102  106  108  104'

| | | | |
|---|---|---|---|
| Motion sensor | $m$ → Setpoint controller | $c$ → OIS controller | |

$u$

$v$

110

Driver

Pos. sensor   112

114

F

116  118  120

Image sensor

122

124  $r$  F'

DIS system

**Fig. 2**

To DIS
system
124

101

Angle-to-pos. 232

r

v' +

234

v

230

L

Zoom
level
107

L

Setpoint
controller
106

c

Control system

s

Controlled system (OIS lens,
image sensor, Driver)
224

112

Position
sensor

u

OIS
controller
108

v

e

θ

208

206

+ −

222

ω

Gyro
202

204

104

210

*Fig. 3*

300

S301 Obtain a sequence of motion values sampled from the motion signal while capturing the sequence of video frames such that each video frame is associated with a respective motion value

S302 Obtain a sequence of position values sampled from the position signal while capturing the sequence of video frames such that each video frame is associated with a respective position value

S303 Determine, for each respective video frame, a residual motion value to obtain a sequence of residual motion values for the sequence of video frames

S304 Perform DIS on the sequence of video frames

*Fig. 4*

304

Detect an image feature in a reference video frame of the sequence of video frames. — S3041

Track the image feature in each further video frame of the sequence of video frames — S3042

Determine frame motion data based on a displacement for the image feature in each further video frame in the sequence of video frames — S3043

Generate a stabilized sequence of video frames based on the frame motion data — S3044

*Fig. 5*

400-1    404-1

402

$r = r_1$

$W_1 = W_{init}$

406-1

408

$W_1$

**Fig. 6a**

400-2    404-2

402

$r = r_2$

$d$

$W_2 = W(r)$

406-2

408

$d'$

$W_2$

**Fig. 6b**

400-3    404-3

402

$r = r_3$

$d$

$W_3 = W(r)$

406-3    408

$d'$

$W_3$

**Fig. 6c**

500-1　504-1

502

$r = r_1$

$$W_1 = W(|r_1|)$$

■ $wp_1$

**Fig. 7a**

500-2　504-2

$r = r_2$

$wp_1$

$\Delta wp_2$

$wp_2$

$d$

502

$$W_2 = W(|r_2|)$$

**Fig. 7b**

Europäisches
Patentamt

European
Patent Office

Office européen
des brevets

# EUROPEAN SEARCH REPORT

**Application Number**

EP 24 22 1821

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/057445 A1 (TSUBAKI HIDETOSHI [JP]) 25 February 2016 (2016-02-25) | 1-10, 12-15 | INV.<br>G02B27/64 |
| Y | * abstract *<br>* figures 1, 8A-D, 7A-B, 8C, 11D-E, 12, 13 *<br>* paragraph [0015] *<br>* paragraph [0042] *<br>* paragraph [0044] *<br>* paragraph [0053] – paragraph [0054] *<br>* paragraph [0059] *<br>* paragraph [0061] *<br>* paragraph [0066] *<br>* paragraph [0097] *<br>* paragraph [0100] – paragraph [0120] *<br>* paragraph [0136] – paragraph [0137] *<br>* paragraph [0131] *<br>* paragraph [0139] – paragraph [0141] *<br>* paragraph [0145] – paragraph [0150] *<br>* paragraph [0154] – paragraph [0155] *<br>----- | 11 | G06T7/246<br>H04N23/68 |
| Y | US 2024/284048 A1 (JUNG HYEYUN [KR] ET AL) 22 August 2024 (2024-08-22) | 11 | |
| A | * abstract *<br>* figures 10, 11, 12 *<br>* paragraph [0004] *<br>* paragraph [0079] – paragraph [0091] *<br>* paragraph [0130] – paragraph [0133] *<br>----- | 1-10, 12-15 | TECHNICAL FIELDS SEARCHED (IPC)<br><br>H04N<br>G02B<br>G06T |
| Y | US 2016/360111 A1 (THIVENT DAMIEN J [US] ET AL) 8 December 2016 (2016-12-08) | 11 | |
| A | * abstract *<br>* paragraph [0005] *<br>* paragraph [0047] *<br>* paragraph [0050] *<br>----- | 1-10, 12-15 | |

-/--

The present search report has been drawn up for all claims

| Place of search | Date of completion of the search | Examiner |
|---|---|---|
| Munich | 8 May 2025 | Furlan, Silvano |

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 22 1821

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2017/257573 A1 (ABE TOMONARI [JP]) 7 September 2017 (2017-09-07) * abstract * * figures 13, 14, 15 * * paragraph [0010] * ----- | 1-15 | |

TECHNICAL FIELDS SEARCHED (IPC)

The present search report has been drawn up for all claims

| Place of search | Date of completion of the search | Examiner |
|---|---|---|
| Munich | 8 May 2025 | Furlan, Silvano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 1821

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2025

| Patent document cited in search report | | | Publication date | Patent family member(s) | | | Publication date |
|---|---|---|---|---|---|---|---|
| US | 2016057445 | A1 | 25-02-2016 | JP | 6395506 | B2 | 26-09-2018 |
| | | | | JP | 2016046666 | A | 04-04-2016 |
| | | | | US | 2016057445 | A1 | 25-02-2016 |
| US | 2024284048 | A1 | 22-08-2024 | CN | 118540583 | A | 23-08-2024 |
| | | | | EP | 4422196 | A1 | 28-08-2024 |
| | | | | KR | 20240130490 | A | 29-08-2024 |
| | | | | TW | 202435623 | A | 01-09-2024 |
| | | | | US | 2024284048 | A1 | 22-08-2024 |
| US | 2016360111 | A1 | 08-12-2016 | US | 2016360111 | A1 | 08-12-2016 |
| | | | | US | 2017280059 | A1 | 28-09-2017 |
| US | 2017257573 | A1 | 07-09-2017 | JP | 6700872 | B2 | 27-05-2020 |
| | | | | JP | 2017161586 | A | 14-09-2017 |
| | | | | US | 2017257573 | A1 | 07-09-2017 |

EPO FORM P0459

For more details about this annex : see Official Journal of the European Patent Office, No. 12/82